(19) Europäisches Patentamt
European Patent Office
Office européen des brevets

(11) **EP 4 149 155 A1**

(12) **EUROPEAN PATENT APPLICATION**
published in accordance with Art. 153(4) EPC

(43) Date of publication:
**15.03.2023   Bulletin 2023/11**

(21) Application number: **21813367.6**

(22) Date of filing: **17.05.2021**

(51) International Patent Classification (IPC):
***H04W 28/02*** (2009.01)

(52) Cooperative Patent Classification (CPC):
**H04W 28/02; H04W 28/10; H04W 28/20;
H04W 28/24**

(86) International application number:
**PCT/CN2021/094056**

(87) International publication number:
**WO 2021/238694 (02.12.2021 Gazette 2021/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.05.2020   CN 202010449643
29.08.2020   CN 202010890854**

(71) Applicant: **Huawei Technologies Co., Ltd.
Shenzhen, Guangdong 518129 (CN)**

(72) Inventors:
• ZHANG, Jiayi
  Shenzhen, Guangdong 518129 (CN)
• WANG, Tongtong
  Shenzhen, Guangdong 518129 (CN)
• AKIN, Sami
  30167 Hannover (DE)
• FIDLER, Markus
  30167 Hannover (DE)

(74) Representative: **Thun, Clemens
Mitscherlich PartmbB
Patent- und Rechtsanwälte
Sonnenstraße 33
80331 München (DE)**

(54) **METHOD FOR DETERMINING BANDWIDTH FOR TRANSMITTING SERVICE FLOW, DEVICE AND SYSTEM**

(57)    This application provides a method, device, and system for determining a bandwidth for service flow transmission. The method includes: A first device obtains a first traffic sampling set of a service flow, where the first traffic sampling set includes one or more pieces of traffic sampling information. The first device obtains a service level parameter corresponding to the service flow and a reliability probability of meeting the service level parameter. The first device determines, based on the first traffic sampling set, the service level parameter, and the reliability probability, a bandwidth for transmitting the service flow. Using the method can improve reliability of service flow transmission.

Step 301: A first device obtains a first traffic sampling set of a service flow

Step 302: The first device obtains a service level parameter corresponding to the service flow and a reliability probability of meeting the service level parameter for transmitting the service flow

Step 303: The first device determines, based on the first traffic sampling set, the service level parameter, and the reliability probability, a first bandwidth for transmitting the service flow

FIG. 3

**Description**

This application claims priorities to Chinese Patent Application No. 202010449643. X, filed with the China National Intellectual Property Administration on May 25, 2020 and entitled "METHOD, DEVICE, AND SYSTEM FOR OBTAINING BANDWIDTH", and to Chinese Patent Application No. 202010890854.7, filed with the China National Intellectual Property Administration on August 29, 2020 and entitled "METHOD, DEVICE, AND SYSTEM FOR DETERMINING BANDWIDTH FOR SERVICE FLOW TRANSMISSION", both of which are incorporated herein by reference in their entireties.

**TECHNICAL FIELD**

This application relates to the field of communication technologies, and in particular, to a method, device, and system for determining a bandwidth for service flow transmission.

**BACKGROUND**

A bandwidth (bandwidth) is a measurement of an amount of traffic transmitted in a network per unit of time. Usually, in the network, the bandwidth is used to determine requirements of network services on network resources. For example, in a statistical multiplexing network, a network bandwidth is often deployed based on a bandwidth. However, ultra-reliable low-delay communication (Ultra-Reliable Low-Latency Communication, URLLC) services using a fifth generation (fifth generation, 5G) technology are sensitive to quality of service (Quality of Service, QoS). How to provide services with quality of service that meets service requirements and allocate bandwidth resources while meeting service quality requirements is a technical problem to be resolved for a current network.

**SUMMARY**

Embodiments of this application provide a method, device, and system for determining a bandwidth for service flow transmission, to improve reliability of the service flow transmission, so that the service flow transmission meets a service requirement.

According to a first aspect, an embodiment of this application provides a method for determining a bandwidth for service flow transmission. The method is performed by a first device.

The first device obtains a first traffic sampling set of a service flow, where the first traffic sampling set includes one or more pieces of traffic sampling information. The first device obtains a service level parameter corresponding to the service flow and a reliability probability of meeting the service level parameter. The first device determines, based on the first traffic sampling set, the service level parameter, and the reliability probability, a first bandwidth for transmitting the service flow.

The first device determines, based on the first traffic sampling set, the service level parameter, and the reliability probability, a bandwidth for transmitting the service flow. This not only can improve reliability of service flow transmission, but also can make service flow transmission more likely to meet a requirement of a service for the service level parameter and a corresponding reliability probability.

In a possible implementation, the first device obtains the first traffic sampling set by receiving the first traffic sampling set from a second device on a transmission path of the service flow. An implementation in which the first device obtains the first traffic sampling set is provided. To be specific, the first device obtains the first traffic sampling set of the service flow from the device on the transmission path of the service flow.

In a possible implementation, the first device may further send an advertisement packet to the second device, where the advertisement packet carries the first bandwidth, the advertisement packet indicates the second device to set, based on the first bandwidth, a bandwidth for transmitting the service flow. In addition to improving reliability of service flow transmission, bandwidth resources can be properly allocated and deployed.

In a possible implementation, the first device obtains the first traffic sampling set collected by the local device. The first device sets, based on the first bandwidth, a bandwidth for transmitting the service flow by the local device. For example, the first device transmits the service flow by using the first bandwidth. An implementation in which the first device obtains the first traffic sampling set is provided. To be specific, the local device collects the service flow to obtain the first traffic sampling set. This implementation is commonly used as a software functional unit, and is deployed on a device on a transmission path of a service flow in a distributed manner.

In a possible implementation, each of the one or more pieces of traffic sampling information includes a total length of a packet that is of the service flow and that is obtained within a specified period. For example, the traffic sampling information includes a total length $A_k$ of a packet of a service flow A, where k=1, ..., N, and N is a quantity of sampling times.

In a possible implementation, the first traffic sampling set further includes a timestamp for obtaining each piece of traffic sampling information. For example, the timestamp is $T_k$, where k=1, ..., N, and N is a quantity of sampling times, and $T_1$ is a timestamp for obtaining traffic sampling information $A_1$ through collection.

In a possible implementation, that the first device obtains a service level parameter corresponding to the service flow and a reliability probability of meeting that the service level parameter includes any one of the following cases.

When the service level parameter is a first delay threshold for transmitting the service flow by a single device on a path for transmitting the service flow, the first device obtains the first delay threshold and a first reliability probability that a single device meets that a delay of transmitting the service flow is less than or equal to the first buffer threshold.

When the service level parameter is a first buffer threshold of a single device on the path of the service flow, the first device obtains the first buffer threshold and a second reliability probability that a buffer of the single device is greater than or equal to the first buffer threshold.

When the service level parameter includes a first delay threshold and a first buffer threshold, the first device obtains the first delay threshold, a first reliability probability of meeting that a delay of transmitting the service flow by the single device is less than or equal to the first threshold, the first buffer threshold of the single device, and a second reliability probability that a buffer of the single device is greater than or equal to the first buffer threshold. The first delay threshold is a maximum delay for transmitting the service flow by the single device, and the first buffer threshold is a minimum value of the buffer of the single device.

In the foregoing method, when obtaining the service level parameter, the first device further obtains a reliability probability of meeting the service level parameter. The first device obtains different bandwidths through calculation based on different service level parameters and reliability probabilities.

In a possible implementation, an implementation in which the first device determines the first bandwidth based on the first traffic sampling set, the service level parameter, and the reliability probability includes the following steps.

The first device first obtains N pieces of traffic sampling information based on the first traffic sampling set, where the N pieces of traffic sampling information include $A_i, A_{i+1}...A_j$, where $1 \leq i \leq j \leq N$, and i and j are integers, $A_i$ is a total length of a packet that belongs to the service flow in an $i^{th}$ piece of traffic sampling information, $A_{i+1}$ is a total length of a packet that belongs to the service flow in an $(i+1)^{th}$ piece of traffic sampling information, and $A_j$ is a total length of a packet that belongs to the service flow in a $j^{th}$ piece of traffic sampling information.

The first device obtains an accumulated packet length in one or more service flows based on $S_{ij} = A_i + A_{i+1} + \cdots + A_j$. The first device obtains an instantaneous bandwidth of the service flow based on the one or more accumulated packet lengths and the service level parameter.

The first device obtains the first bandwidth based on the instantaneous bandwidth and the reliability probability.

In a possible implementation, when the service level parameter includes the first delay threshold, the reliability probability includes the first reliability probability, and the first traffic sampling set further includes a timestamp for obtaining each piece of traffic sampling information. The first device obtains the instantaneous bandwidth according to a formula $BW' = S_{ij}/((j - i + 1)T + D')$, where D' is the first delay threshold, T is a difference between timestamps corresponding to two adjacent times of traffic sampling information, and BW' is the instantaneous bandwidth. The first device sort values of the instantaneous bandwidth in ascending order based on the instantaneous bandwidth, and determine that a value corresponding to an $M = N(N + 1)/2 \times P'$ element is the first bandwidth, where a value corresponding to M is the value of the first bandwidth, and P' is the first reliability probability.

When the first device obtains the delay threshold and the reliability probability of meeting the delay threshold, a calculation manner of obtaining the first bandwidth is provided, to improve service flow transmission reliability and implement a low-delay transmission requirement of a service.

In a possible implementation, when the service level parameter includes the first buffer threshold, the reliability probability includes the second reliability probability, and the first traffic sampling set further includes a timestamp for obtaining each piece of traffic sampling information. The first device obtains the instantaneous bandwidth according to a formula $BW' = (S_{ij} - B)/((j - i + 1)T)$, where B is the first buffer threshold, T is a difference between timestamps corresponding to two adjacent times of traffic sampling information, and BW' is the instantaneous bandwidth. The first device sort values of the instantaneous bandwidth in ascending order based on the instantaneous bandwidth, and determine that a value corresponding to an $M = N(N + 1)/2 \times P'$ element is the first bandwidth, where a value corresponding to M is the value of the first bandwidth, and P' is the second reliability probability.

When the first device obtains the device buffer threshold and the reliability probability of meeting the buffer threshold, a manner of calculating the first bandwidth is provided, to improve service flow transmission reliability and implement a transmission requirement of a service.

In a possible implementation, the first device first obtains a second delay threshold for end-to-end transmission of the service flow and a third reliability probability that a delay of end-to-end transmission of the service flow is less than or equal to the second delay threshold. The first device determines the first delay threshold for the single device for transmitting the service flow based on a quantity of devices on the transmission path of the service flow and the second delay. The first device determines the first reliability probability of meeting that a delay of transmitting the service flow by the single device is less than or equal to the first threshold based on the quantity of devices on the transmission path of the service flow and the third reliability probability.

In a possible implementation, the first device determines the first delay threshold based on a quantity of devices on the transmission path of the service flow and the second delay; and specifically obtained according to the formula:

$$D' = (D - D_f)/H$$

D' is the first delay threshold, H is a quantity of devices on the transmission path of the service flow, D is the second delay threshold, $D_f$ is a fixed delay on the transmission path of the service flow, and the fixed delay includes at least one of the following delays: a link delay on the transmission path of the service flow, a processing delay of a device, an outbound interface delay of a device, or an initial delay of a device.

In a possible implementation, the first device determines the first reliability probability based on a quantity of devices on the transmission path of the service flow and the third reliability probability; and specifically obtained according to the formula:

$$P' = 1 - (1 - p)^{1/H}$$

H is a quantity of devices on the transmission path of the service flow, p is the third reliability probability, and P' is the first reliability probability.

In a possible implementation, the first device further continues to send the instantaneous bandwidth of the service flow to a third device, where the instantaneous bandwidth is used for determining a second bandwidth by the third device based on the instantaneous bandwidth.

The first device sends, to the device, an intermediate process value for calculating the first bandwidth, so that the device on the service path may calculate an updated bandwidth value by using the intermediate process value, to implement fast update by using a bandwidth resource.

In a possible implementation, the first device may further determine, based on the second traffic sampling set of the service flow, the service level parameter, and the reliability probability, a third bandwidth for transmitting the service flow. The first device determines, in response that the first device determines that the third bandwidth is greater than or equal to a bandwidth threshold, to transmit the service flow by using the third bandwidth.

To avoid frequent changes of a calculation result of the bandwidth, which causes frequent flapping of the bandwidth configuration and affects service flow transmission, the first device sets a bandwidth threshold, and adjusts a configured bandwidth when the updated bandwidth is greater than or equal to the bandwidth threshold, to improve stability of the network bandwidth configuration.

In a possible implementation, in response to determining that the third bandwidth is greater than or equal to a bandwidth threshold, an implementation in which the first device determines to transmit the service flow by using the third bandwidth includes: in response to determining that duration in which the third bandwidth is greater than or equal to the bandwidth threshold is greater than or equal to a time threshold, the first device determines to transmit the service flow by using the third bandwidth.

To avoid that a calculation result of the bandwidth frequently changes, where the frequent change causes frequent flapping of the bandwidth configuration and affects service flow transmission, the first device sets the bandwidth threshold and the time threshold, and adjusts a configured bandwidth when duration in which the updated bandwidth value is greater than or equal to the bandwidth threshold is greater than or equal to the time threshold, to improve stability of the network bandwidth configuration.

According to a second aspect, an embodiment of this application provides a method for determining a bandwidth for transmitting a service flow. The method is performed by a second device, and the second device is a device on a transmission path of the service flow.

A second device sends a first traffic sampling set of a service flow to a first device, where the first traffic sampling set includes one or more pieces of traffic sampling information, the first traffic sampling set is used for determining a first bandwidth by the first device. The second device receives an advertisement packet from the first device, where the advertisement packet includes the first bandwidth; and the second device sets a bandwidth for transmitting the service flow.

In a possible implementation, the second device sends, to the first device, a service level parameter of the service flow and a reliability probability of meeting the service level parameter, where the service level parameter and the reliability probability are used for determining the first bandwidth by the first device.

In a possible implementation, each of the one or more pieces of traffic sampling information includes a total length of a packet that is of the service flow and that is obtained within a specified period.

In a possible implementation, the first traffic sampling set includes a timestamp for obtaining each of the one or more pieces of traffic sampling information.

In a possible implementation, that the second device sends, to a first device, a service level parameter corresponding to the service flow and a reliability probability of meeting that the service level parameter includes any one of the following cases:

sending, to the first device, a first delay threshold for transmitting the service flow by a single device on the path for transmitting the service flow and a first reliability probability of meeting that a delay of transmitting the service flow by the single device is less than or equal to the first threshold, where the first delay threshold is a maximum delay for transmitting the service flow by the single device; and/or

sending, to the first device, a first buffer threshold of a single device on the path for transmitting the service flow and a second reliability probability that a buffer of the single device is greater than or equal to the first buffer threshold, where the first buffer threshold is a minimum value of the buffer of the single device.

According to the implementation, it should be understood that in one case, the second device sends, to the first device, a first delay threshold for transmitting the service flow by a single device on a path for transmitting the service flow and a first reliability probability of meeting, by the single device, that a delay of transmitting the service flow is less than or equal to the first threshold. In another case, the second device sends, to the first device, a first buffer threshold of a single device and a second reliability probability that a buffer of the single device is greater than or equal to the first buffer threshold. In another case, the second device sends, to the first device, a first delay threshold for transmitting the service flow by a single device on a path for transmitting the service flow and a first reliability probability that the single device meets that the service flow is less than or equal to the first threshold for transmitting the service flow, the first buffer threshold of the single device and a second reliability probability that the buffer of the single device is greater than or equal to the first buffer threshold.

In a possible implementation, the second device sends, to the first device, a second delay threshold for end-to-end transmission of the service flow and a third reliability probability that a delay of end-to-end transmission of the service flow is less than or equal to the second delay threshold, where the second delay threshold is a maximum delay of end-to-end transmission of the service flow.

In a possible implementation, the second device may further determine, based on the second traffic sampling set of the service flow, the service level parameter, and the reliability probability, a second bandwidth. The second device sets, based on the first bandwidth and the second bandwidth, a bandwidth for transmitting the service flow.

In a possible implementation, an implementation in which the second device determines the second bandwidth based on the second sampling information of the service flow, the service level parameter, and the reliability probability includes: obtaining N pieces of traffic sampling information based on the second traffic sampling set, where the N pieces of traffic sampling information include $A_i$, $A_{i+1}$ ...$A_j$: $1 \le i \le j \le N$, i, j are integers, $A_i$ is a total length of a packet belonging to the service flow in an $i^{th}$ piece of traffic sampling information, and $A_{i+1}$ is a total length of a packet belonging to the service flow in an $(i+1)^{th}$ piece of traffic sampling information; and $A_j$ is a total length of a packet that belongs to the service flow in the $j^{th}$ piece of traffic sampling information; obtaining an accumulated packet length in the one or more service flows according to $S_{ij} = A_i + A_{i+1} + \cdots + A_j$; obtaining the instantaneous bandwidth of the service flow according to the one or more accumulated packet lengths and the service level parameter; and obtaining, based on the instantaneous bandwidth and the reliability probability, the second bandwidth for transmitting the service flow.

In a possible implementation, when the service level parameter includes the first delay threshold, the reliability probability includes the first reliability probability, and the second traffic sampling set further includes a timestamp for obtaining each of the one or more pieces of traffic sampling information, an implementation of obtaining the instantaneous bandwidth of the data flow based on the accumulated packet lengths and the service level parameter includes: obtaining the instantaneous bandwidth according to a formula $BW' = S_{ij}/(j - i + 1)T + D')$, where $D'$ is the first delay threshold, $T$ is a difference between timestamps corresponding to two adjacent times of traffic sampling information, and $BW'$ is the instantaneous bandwidth. An implementation of obtaining, based on the instantaneous bandwidth and the reliability probability, the bandwidth for transmitting the data flow includes: sorting values of the instantaneous bandwidth in ascending order, determining that a value corresponding to an element ranked $M = N(N + 1)/2 \times P'$ is the second bandwidth, and a value corresponding to M is a value of the first bandwidth; and $P'$ is the first reliability probability.

In a possible implementation, when the service level parameter includes the first buffer threshold, the reliability probability includes the second reliability probability, and the second traffic sampling set further includes a timestamp for obtaining each of the one or more pieces of traffic sampling information, an implementation of obtaining the instantaneous bandwidth of the data flow based on the accumulated packet length and the service level parameter includes: obtaining the instantaneous bandwidth according to a formula $BW' = (S_{ij} - B)/((j - i + 1)T)$, where $B$ is the first buffer threshold, $T$ is a difference between timestamps corresponding to two adjacent times of traffic sampling information, and $BW'$ is the instantaneous bandwidth. An implementation of obtaining, based on the instantaneous bandwidth and the reliability probability, the bandwidth for transmitting the data flow includes: sorting values of the instantaneous bandwidth in ascending order, determining that a value corresponding to an element ranked $M = N(N + 1)/2 \times P'$ is the first bandwidth, and a value corresponding to M is a value of the first bandwidth; and P' is the second reliability probability.

In a possible implementation, the second device determines, based on the third traffic sampling information of the service flow, the service level parameter, and the reliability probability, a second bandwidth to obtain a third bandwidth. The second device transmits the service flow by using the third bandwidth, in response to the third bandwidth being greater than or equal to a bandwidth threshold.

In a possible implementation, that the second device transmits the service flow by using the third bandwidth, in response to the third bandwidth being greater than or equal to a bandwidth threshold includes: The second device transmits the service flow by using the third bandwidth, in response to the third bandwidth being greater than or equal to a bandwidth threshold.

In a possible implementation, an implementation in which the second device sets, based on the first bandwidth, the bandwidth for transmitting the service flow includes: The second device sets, a value of a committed information rate CIR of a port for transmitting the service flow to a value of the first bandwidth, and sends the service flow based on the CIR.

In a possible implementation, another implementation of setting, by the second device based on the first bandwidth, a bandwidth for transmitting the service flow includes: The second device sets, based on a port bandwidth for transmitting the service flow and the first bandwidth, a scheduling weight value for transmitting the service flow, and sends the service flow based on the scheduling weight value.

In a possible implementation, based on a mapping relationship between an identifier of a network slice and the service flow, a first port of the second device transmits a bandwidth of the service flow by using the first bandwidth, where the first port belongs to the network slice.

According to a third aspect, a first device is provided and is configured to perform the method in any one of the first aspect or the possible implementations of the first aspect. Specifically, the network device includes a unit configured to perform the method in any one of the first aspect or the possible implementations of the first aspect.

According to a fourth aspect, a second device is provided and is configured to perform the method in any one of the second aspect or the possible implementations of the second aspect. Specifically, the network device includes a unit configured to perform the method in any one of the second aspect or the possible implementations of the second aspect.

According to a fifth aspect, a first device is provided, and the controller includes a processor, a communication interface, and a memory. The communication interface is configured to receive or send a packet. The memory may be configured to store program code. The processor is configured to invoke the program code in the memory to perform any one of the first aspect or the possible implementations of the first aspect. For details, refer to the detailed descriptions in the method example. Details are not described herein again.

According to a sixth aspect, a second device is provided, and the controller includes a processor, a communication interface, and a memory. The communication interface is configured to receive or send a packet. The memory may be configured to store program code. The processor is configured to invoke the program code in the memory to perform any one of the second aspect or the possible implementations of the second aspect. For details, refer to the detailed descriptions in the method example. Details are not described herein again.

According to a seventh aspect, a system for determining a bandwidth for transmitting a service flow is provided. The system includes a first device configured to perform the method in any one of the first aspect or the possible implementations of the first aspect and a second device configured to perform the method in any one of the second aspect or the possible implementations of the second aspect. For example, the first device is configured to: obtain a first traffic sampling set of a service flow, a service level parameter corresponding to the service flow, and a reliability probability of meeting the service level parameter; determine, based on the first traffic sampling set, the service level parameter of the service flow, and the reliability probability, a first traffic bandwidth for transmitting the service flow; and send the first bandwidth to the second device, where the first traffic sampling set includes one or more pieces of traffic sampling information. The second device is configured to: send the first traffic sampling set to the first device, receive a first bandwidth, and set, based on the first bandwidth, a bandwidth for transmitting the service flow.

According to an eighth aspect, a computer-readable medium including instructions is provided. When the instructions are executed on a computer, the computer is enabled to perform the method in any one of the first aspect or the possible implementations of the first aspect, or perform the method in any one of the second aspect or the possible implementations of the second aspect.

According to a ninth aspect, a computer program product including instructions is provided. When the computer program product runs on a computer, the computer is enabled to perform the method in any one of the first aspect or the possible implementations of the first aspect, or perform the method in any one of the second aspect or the possible implementations of the second aspect.

## BRIEF DESCRIPTION OF DRAWINGS

FIG. 1 is a schematic diagram of an architecture of a system for determining a bandwidth for service flow transmission according to an embodiment of this application;

FIG. 2 is a schematic diagram of an application scenario for determining a bandwidth for service flow transmission according to an embodiment of this application;

FIG. 3 is a schematic flowchart of a method for determining a bandwidth for service flow transmission according to an embodiment of this application;

FIG. 4 is a schematic diagram of sampling information of a service flow according to an embodiment of this application;

FIG. 5 is a schematic diagram of sampling information of another service flow according to an embodiment of this application;

FIG. 6 is a schematic flowchart of a method for determining a bandwidth for service flow transmission according to an embodiment of this application;

FIG. 7 is a schematic flowchart of a method for determining a bandwidth for service flow transmission according to an embodiment of this application;

FIG. 8 is a schematic diagram of a packet format according to an embodiment of this application;

FIG. 9 is a schematic diagram of a structure of a first device according to an embodiment of this application;

FIG. 10 is a schematic diagram of a structure of a second device according to an embodiment of this application;

FIG. 11 is a schematic diagram of a hardware structure of a first device according to an embodiment of this application;

FIG. 12 is a schematic diagram of a hardware structure of a second device according to an embodiment of this application; and

FIG. 13 is a system for determining a bandwidth for service flow transmission according to an embodiment of this application.

## DESCRIPTION OF EMBODIMENTS

With reference to the accompanying drawings, the following describes implementations of a method, device and system for determining a bandwidth for service flow transmission that are provided in embodiments of this application.

In an internet protocol (Internet Protocol, IP) network, a bandwidth is a measurement of an amount of traffic per unit of time. The bandwidth is related to a statistical period of service flow characteristics. For example, an average bandwidth is used to describe a stable data volume in long time, and has a long statistical period. A peak bandwidth is used to describe a maximum value of an instantaneous data volume, and a statistical period is short. For example, in a statistical process, a time unit, such as milliseconds or microseconds may be selected based on a service flow characteristic to perform statistics on the service flow. In addition, bandwidths are also classified into an available bandwidth and a bandwidth that meets a delay requirement. The available bandwidth describes random traffic, and the bandwidth that meets a delay requirement describes traffic for a transmission service flow that meets a low delay requirement. However, different service types have different requirements for reliability probabilities (which may also be referred to as probabilities that meet the service level for short) of a service level parameter that need to be met during service transmission. Bandwidth types in the foregoing classification cannot meet requirements of different services for different reliability probabilities, and therefore cannot meet a URLLC service transmission requirement in 5G.

Therefore, embodiments of this application provide a method, device, and system for determining a bandwidth for service flow transmission, to meet different requirements of different service flows for probabilities that meet the service level parameter requirement in a transmission process. This improves a reliability of service flow transmission to some extent. In the method, the bandwidth for transmitting the service flow is determined based on the traffic sampling information of the service flow, a service level agreement (Service Level Agreement, SLA) parameter corresponding to the service flow, and a reliability probability of meeting the service level parameter.

An SLA is an agreement between a network service provider and a customer to ensure that measurable network service performance can reach the specified quality. Content of network service performance stipulated in the SLA may be defined based on a service requirement. The customer selects a service level parameter and a reliability probability of meeting the service level parameter and provides a service for the service based on the service type. In an implementation, an SLA indicator includes the service level parameter and the reliability probability that service flow transmission meets the service level parameter. For example, when the service level parameter is a delay threshold, the SLA indicator includes a delay threshold for transmitting a service flow and a reliability probability that a delay of transmitting the service flow is less than or equal to the delay threshold. For example, an SLA indicator associated with a plurality of service types defined in the 5G service include a low delay requirement. It should be noted that the delay threshold for transmitting a service flow may be a delay threshold for transmitting a service flow by a single device on a service flow transmission path, or a delay threshold for end-to-end service flow transmission. The delay threshold may include a delay jitter threshold. In another implementation, when the service level parameter is a buffer threshold of a device, the SLA indicator includes a buffer threshold of a device for service flow transmission and a reliability probability that a buffer of the device for transmitting the service flow is greater than or equal to the buffer threshold. In another implementation, when the service level parameter is a delay threshold and a buffer threshold of a device, the SLA indicator includes a delay threshold for service flow transmission, a buffer threshold of a device for service flow transmission, a reliability probability that a delay of transmitting the service flow is less than or equal to the delay threshold, and a reliability probability that a buffer of the device for transmitting the service flow is greater than or equal to the buffer threshold.

It may be understood that the method for determining a bandwidth for service flow transmission provided in this embodiment of this application may be applied to a URLLC scenario in 5G. In these scenarios, a network needs to properly coordinate available bandwidth resources, and allocate and reserve bandwidth resources, such as an industrial manufacturing automation scenario, electric power automation scenario, and internet of vehicles scenario. These scenarios impose strict requirements on the transmission reliability probability. For example, the solution in this embodiment of this application may be used to provide a high-reliability bounded delay guarantee for a smart grid differential protection service, or may provide a high-reliability and bounded delay forwarding service for a service flow of a control-type service in a campus network. The solution can also be used in smart factories to provide a high-reliability bounded delay guarantee for sensors to collect service traffic, industrial control traffic, and video surveillance traffic based on wired Ethernet or a wireless network.

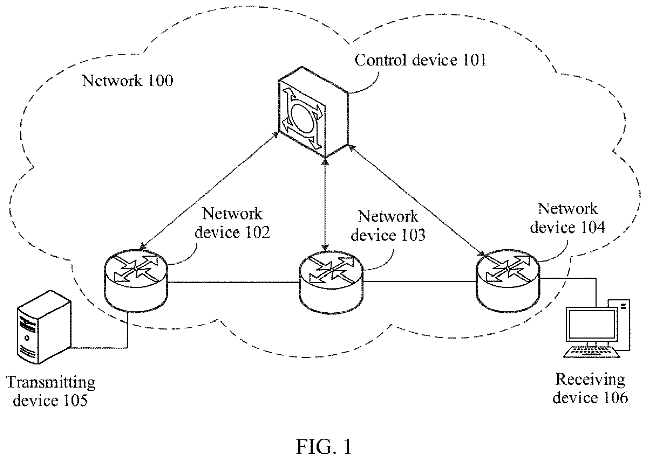

The following uses FIG. 1 as an example to describe a network architecture to which the solutions in embodiments of this application are applicable. A network 100 in FIG. 1 includes a control device 101 and network devices 102 to 104. A transmitting device 105 is a source device that sends a service flow, and a receiving device 106 is a destination device of a service flow. The devices 102 to 104 are forwarding devices on a service flow transmission path, and are configured to forward the service flow from the transmitting device 105 to the receiving device 106 in the network 100. The device 103 is separately connected to the device 102 and the device 104. The control device 101 is connected to the devices 102 to 104, to implement management and resource deployment on the devices 102 to 104. It should be noted that FIG. 1 is merely a schematic diagram of an example system architecture according to an embodiment of this application, and should not constitute a limitation on a network architecture of this solution. For example, the network 100 in FIG. 1 may further include a plurality of forwarding devices other than the devices 102 to 104.

It should be noted that, as shown in FIG. 1, the control device may be an independent physical device, that is, physically independent of the network devices 102 to 104. Alternatively, the control device may be a functional unit integrated into any one of the network devices 102 to 104. Alternatively, the control device may be split into several functional sub-units deployed on the network devices 102 to 104 in a distributed manner. Provided that the control device has logically corresponding management and control functions, an existence form of the control device is not limited in this embodiment of this application. The devices 102 to 104 in FIG. 1 may be in a form of hardware or a combination of software and hardware, and each are an independent device, for example, a device having a forwarding function such as a switch and a router, and are configured to receive and send the service flow in the network 100.

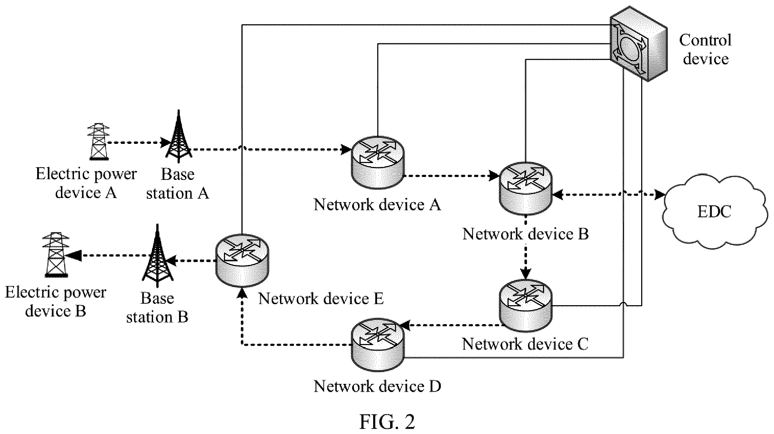

Further, FIG. 2 is a schematic diagram of an application scenario for determining a bandwidth for service flow transmission according to an embodiment of this application. The scenario is a schematic diagram of an electric power automation system scenario. Differential protection for power devices is an important self-protection method for power networks. For example, electrical quantities at both ends of a transmission line are compared to determine a fault scope, implementing precise fault isolation and preventing the impact scope from being expanded due to power failures. Therefore, the electric power automation scenario needs to have requirements such as a low delay and high reliability on a bandwidth for service flow transmission, to ensure that an electric power device A and an electric power device B in FIG. 2 implement differential protection for the electric power device.

With reference to the schematic diagrams in the scenarios shown in FIG. 1 and FIG. 2, FIG. 3 is a schematic flowchart of a method for determining a bandwidth for service flow transmission according to an embodiment of this application. There is no limitation on a sequence of step 301 and step 302. For example, step 302 may be implemented after step 301, or step 301 may be implemented after step 302. The following describes a method for determining a bandwidth for service flow transmission, and the method includes the following steps.

Step 301: The first device obtains a service level parameter corresponding to a service flow and a reliability probability of meeting the service level parameter.

With reference to FIG. 1, the first device may be the control device 101 in FIG. 1 or the control device in FIG. 2, and the second device is the network device in FIG. 1 or FIG. 2. The first device may obtain, from a local device, the service level parameter corresponding to the service flow and the reliability probability of meeting the service level parameter, or may obtain, from a second device (for example, the network device 102) on a transmission path of the service flow, the service level parameter corresponding to the service flow and the reliability probability of meeting the service level parameter.

Different service types are bound to or associated with different SLA indicators. For example, an SLA parameter includes a delay threshold, or an SLA parameter includes a buffer threshold of a device, or an SLA parameter includes a combination of a delay threshold and a buffer threshold of a device. For example, because a high-end manufacturing industry in an industrial manufacturing scenario has a very high requirement for delay and stability of a workshop device, content of an SLA of a service flow in the industrial manufacturing scenario includes the delay threshold. It should be understood that, when the SLA parameter is obtained, a reliability probability of meeting the SLA parameter is further obtained, and the reliability probability and the SLA parameter are also condition parameters that need to be met during service flow transmission. For example, when it is obtained that the SLA parameter corresponding to the service flow is a delay threshold, a reliability probability that transmission of the service flow is less than or equal to the delay threshold is further obtained. When it is obtained that the SLA parameter corresponding to the service flow is the buffer threshold of the network device, a reliability probability that a buffer of the device for transmitting the service flow is greater than or equal to the buffer threshold may be further obtained.

The following separately describes the delay threshold, the buffer threshold, and the reliability probability in embodiments of this application.

The delay threshold indicates a maximum delay allowed for service flow transmission, and may be classified into a delay threshold for end-to-end service flow transmission and a delay threshold for transmitting the service flow by a single device on a path for transmitting the service flow. In one case, the delay threshold may alternatively be a delay jitter threshold. The delay threshold for end-to-end service flow transmission is a maximum delay allowed in a process of transmitting the service flow from a transmitting device to a destination device. Further, when the transmitting device and the destination device are respectively edge devices of a network, the delay threshold indicates a maximum delay of service flow transmission in the network. For example, a delay threshold of a downlink service flow of a virtual reality (virtual reality, VR) game in a bearer network is 20 milliseconds. The delay threshold for transmitting a service flow by a single device is a maximum delay of transmitting a service flow by a single device on a path for transmitting the service flow. For example, a delay threshold for transmitting a service flow by a single device is a maximum delay of the service flow from an ingress port of the device to an egress port of the device. The delay jitter threshold is a maximum value of inconsistent delays between data packets in a service flow. In an implementation, the delay jitter threshold may be obtained by using a probe packet, and may be a delay jitter threshold of a single device. For a real-time communication technology, the delay jitter threshold is an important parameter. For example, a delay jitter threshold needs to be limited in services such as an IP phone, a video conference, and a virtual desktop. The delay threshold of an end-to-end service flow transmission is associated with the delay threshold of the service flow transmission of a single device. For example, there are a plurality of devices on a transmission path of a service flow. The first device obtains, based on an end-to-end delay threshold for transmitting the service flow and a quantity of devices on a path for transmitting the service flow, a delay threshold for transmitting the service flow by a single device.

The buffer threshold indicates a minimum buffer that can be occupied by the service flow on a device. The buffer threshold may be a queue buffer supported by the device, and may be understood as a queue buffer configured by the device for the service flow. In an implementation, the device on the transmission path of the service flow determines, based on the service flow, a buffer threshold that can be occupied by the service flow, and reports the buffer threshold to the first device. In another implementation, the first device pre-allocates a buffer threshold to the service flow on the device based on collected buffer capability of each device on the transmission path, and stores the buffer threshold of each device.

The reliability probability indicates a probability that an SLA parameter is met in a process of transmitting a service flow. For example, when the SLA parameter corresponding to the service flow is a delay threshold, a corresponding reliability probability is a reliability probability that a delay of transmitting the service flow is less than or equal to the delay threshold. When the SLA parameter corresponding to the service flow is the buffer threshold of the network device, a corresponding reliability probability is a reliability probability that a buffer of a device for transmitting the service flow is greater than or equal to the buffer threshold. In an implementation, the reliability probability p is a parameter less than or equal to 1. When obtaining a delay violation probability/buffer overflow probability (delay violation probability/buffer overflow probability) $\varepsilon$, a reliability probability p may be obtained according to a relational expression $\varepsilon = 1 - p$, and $\varepsilon$ is a maximum value of the violation probability. In an implementation, a reliability probability of a device on a network is obtained based on an end-to-end reliability probability of the transmission service flow of the service.

According to the foregoing descriptions, it should be understood that, when the service level parameter is a first delay threshold for transmitting the service flow by a single device on a path for transmitting the service flow, the first device obtains the first delay threshold and a first reliability probability that a delay of transmitting the service flow met by a single device is less than or equal to the first buffer threshold. When the service level parameter is a first buffer threshold of a single device on the path of the service flow, the first device obtains the first buffer threshold and a second reliability probability that a buffer of the single device is greater than or equal to the first buffer threshold. When the service level parameter includes a first delay threshold and a first buffer threshold, the first device obtains the first delay threshold, a first reliability probability that a delay of transmitting the service flow met by the single device is less than or equal to the first threshold, the first buffer threshold of the single device, and a second reliability probability that a buffer of the single device is greater than or equal to the first buffer threshold.

For example, in the electric power differential protection scenario in FIG. 2, in a process in which the service flow is transmitted from an electric power device A to an electric power device B or the service flow is transmitted from the electric power device B to the electric power device A, a service level parameter that needs to be met is that a maximum value of a transmission delay from the electric power device A to the electric power device B is 20 ms, and a reliability probability is 0.99999. Alternatively, in an industrial automation network, based on stability of service flow transmission in a network, a reliability probability that a minimum buffer of a device on a transmission path of a service flow is 1 megabyte is required to be 0.999.

In an implementation, the first device obtains, from another device by using a user network interface (User Network Interface, UNI) or a centralized user configuration (Centralized User Configuration, CUC), an SLA indicator corresponding to the service flow. In another possible design, the first device obtains, from a correspondence between a service flow that is stored in the first device and an SLA, the SLA indicator corresponding to the service flow. In another possible design, the first device obtains, from a transmitting device of the service flow, the SLA indicator corresponding to the service flow.

Step 302: The first device obtains a first traffic set of the service flow.

With reference to FIG. 1, the first device may be the control device 101. The first device may obtain, from a second device (for example, the network device 102) on the transmission path of the service flow, the first traffic set sampled by the second device. It may be understood that the second device collects the transmitted service flow, and sends the first traffic set obtained through collection to the first device. If the first device is a device on the path for service flow transmission and a device on which a control unit is deployed, the first device may locally obtain the first traffic set sampled by the first device.

The first traffic set includes one or more pieces of traffic sampling information, each of the one or more pieces of traffic sampling information includes a total length of a packet that belongs to the service flow and that is obtained within a specified period. The first traffic sampling set may further include obtaining a timestamp of each of the one or more pieces of traffic sampling information.

A service flow A is used as an example. A traffic set of the service flow A includes one or more pieces of traffic sampling information. Each piece of traffic sampling information includes an accumulated packet length $A_k$ of the service flow A that is obtained in a sampling period $\Delta T_k$. The traffic set of the service flow A may further include a timestamp $T_k$ for obtaining the traffic sampling information, where a counting unit of a packet length is bit or byte, and a form for recording the traffic set of the service flow A is {timestamp $T_k$, accumulated packet length $A_k$}, where k=1, ..., N, and N is a quantity of sampling times. It should be understood that the timestamp $T_k$ is represented as {$T_k$, k = 1, ..., N}, belongs to a time sequence in ascending order, may be in a unit of second, millisecond, microsecond, or the like. Intervals between two adjacent timestamps may be the same, or may be different, to be specific, a period $\Delta T_k = T_k - T_{k-1}$ may be a constant value $\Delta T$, or may be a variable value. The accumulated packet length $A_k$ indicates an accumulated packet length $A_k$ that belongs to the service flow A and that is obtained through sampling in timestamp $T_k$, or may be understood as an accumulated packet length $A_k$ that arrives between a previous timestamp $T_{k-1}$ and a current timestamp $T_k$.

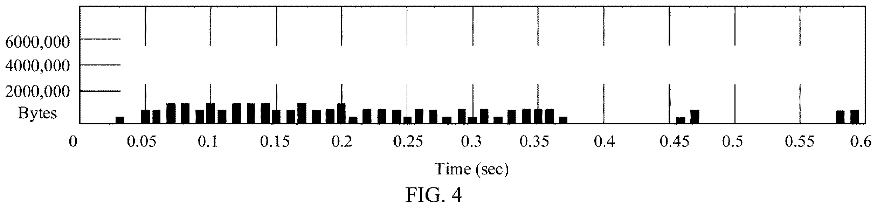

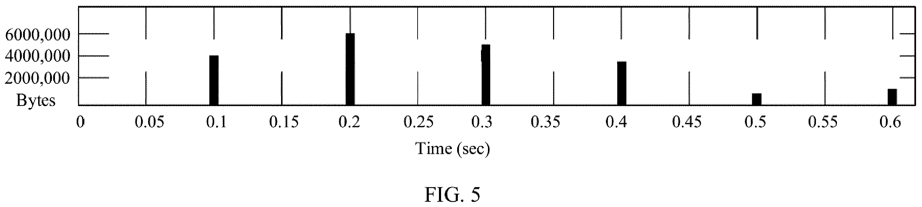

FIG. 4 is a schematic diagram of traffic sampling information of a service flow according to an embodiment of this application. A service flow is collected between adjacent timestamps (an accumulated packet length in a service flow A between $T_{k-1}$, $T_k$], for example, $\Delta T_k$ 0.01 second), to obtain {timestamp $T_k$, accumulated packet length $A_k$}, for example, {$T_k$ = 0.01s, 0.02s, 0.03s, 0.04s, ... ,0.6s, k = 1, ..., N}. FIG. 5 is a schematic diagram of traffic sampling information of another service flow according to an embodiment of this application. Based on obtained traffic sampling information shown in FIG. 4, a statistical period is set based on a service requirement. For example, the period is set 0.1 second, and packet lengths in the specified period in FIG. 4 are accumulated to obtain an accumulated packet length that is in the specified period and that corresponds to a timestamp, so that a manner of obtaining the traffic sampling information of the service flow is more flexible.

In an implementation, because a quantity of sampling times of the service flow, sampling time, and a sampling interval are associated with factors such as a storage supported by the device, the quantity of sampling times of the service flow is set based on a related configuration. For example, a router chip may support sampling of an accumulated arrival service flow at an interval of $\Delta T$ = 0.1s, where a sampling time length is 5s, and a corresponding quantity of sampling times N=50. In an implementation, a manner of storing the timestamp and a data volume {$T_k$, $A_k$} in a double-precision format is used, and storage space occupied by sampled data of N points is 8Byte*2*N.

Step 303: The first device determines, based on first traffic sampling set, a service level parameter, and a reliability probability of meeting the service level parameter for transmitting the service flow, a first bandwidth for transmitting the service flow.

The following describes different implementations of determining the bandwidth for transmitting the service flow based on different SLA parameters obtained by the first device.

Scenario 1: A first device obtains a delay threshold D' of a single device that transmits a service flow and a reliability probability P' that meets the delay threshold D'.

In an implementation, the first device obtains a first traffic sampling set, where the first traffic sampling set includes N pieces of traffic sampling information. For example, the traffic sampling information includes $A_i$, $A_{i+1}$ ...$A_j$ and a timestamp $T_k$ corresponding to obtaining the traffic sampling information, where $1 \le i \le j \le N$, i and j are integers, $A_i$ is a total length of a packet that belongs to the service flow in an $i^{th}$ piece of traffic sampling information, and $A_{i+1}$ is a total length of a packet that belongs to the service flow in an $(i+1)^{th}$ piece of traffic sampling information, and $A_j$ is a total length of a packet that belongs to the service flow and that is in a $j^{th}$ piece of traffic sampling information. The first device selects, based on the obtained traffic sampling information, several groups of adjacent traffic sampling information, to obtain an accumulated length $S_{ij} = A_i + A_{i+1} + \cdots + A_j$ of arrived packets. The first device obtains an instantaneous bandwidth of the service flow based on the accumulated length $S_{ij}$ of the arrived packets, a sampling period $\Delta T_k = T_k - T_{k-1}$, and the delay threshold D'. The first device obtains the first bandwidth based on the instantaneous bandwidth and the reliability probability P'. In an example, the delay threshold for transmitting a service flow by a single device may be a queue delay at which a service flow enqueues, or a sum of a queue delay and a scheduling delay. It should be understood that when i=j, it indicates that the first traffic sampling set obtained by the first device includes one piece of traffic sampling information. In this case, the first device selects, based on the obtained traffic sampling information, several groups of adjacent traffic sampling information, to obtain an accumulated length $S_{ij} = A_i$ of arrived packets.

Further, for example, in an implementation, that the first device obtains the instantaneous bandwidth of the service flow based on the accumulated length $S_{ij}$ of arrived packets, the sampling period $\Delta T_k$, and the delay threshold D' includes: The first device obtains the instantaneous bandwidth BW' according to a formula $BW' = S_{ij}/((j - i)T + D')$, where T is a difference between timestamps corresponding to two adjacent times of traffic sampling information or is a specified period for obtaining traffic sampling information. An implementation in which the first device obtains the first bandwidth based on the instantaneous bandwidth and the reliability probability includes: sorting the obtained instantaneous bandwidth BW' in ascending order to obtain a vector $\rho$, and using a value of a corresponding element ranking $M = N(N + 1)/2 \times P'$ as a value for transmitting the first bandwidth, where a value corresponding to M is a value of the first bandwidth.

In an implementation, the first device obtains a second traffic sampling set of the service flow, where the second traffic sampling set includes one or more pieces of traffic sampling information $\{T_{N+1}, A_{N+1}\}$. In an implementation, the first device obtains an updated bandwidth based on the first traffic sampling set and the second traffic sampling set according to the foregoing formula and algorithm. In another implementation, the first device obtains the updated bandwidth based on only the second traffic sampling set according to the foregoing formula and algorithm.

Scenario 2: A first device obtains an end-to-end delay threshold D for transmitting a service flow and a reliability probability P of meeting the delay threshold D.

In an implementation, before the first device obtains the delay threshold D' for transmitting the service flow by a single device on a path for transmitting the service flow, the first device receives and obtains an end-to-end delay threshold D. It should be understood that the first device needs to obtain the delay threshold D' through calculation based on the delay threshold D. Specifically, the first device determines the delay threshold D' based on a quantity of devices on a transmission path of the service flow and the end-to-end delay threshold D. In an example, the first device subtracts a fixed delay $D_f$ from the end-to-end delay threshold D, and then divides a quantity of devices, to obtain a delay threshold D' of a single device. For example, a delay threshold $D' = (D - D_f)/H$ is obtained according to a formula, where H is a quantity of devices on the transmission path of the service flow. The $D_f$ includes at least one of the following delays: a link delay on the transmission path of the service flow, a processing delay of a device, an interface delay of a device, and an initial delay of a device. For example, $D_f$ includes the link delay and the processing delay of a device, or includes the link delay, the processing delay of a device, and the interface delay of a device, or includes the link delay, the processing delay of a device, the interface delay of a device, and the initial delay of a device. An optical fiber delay may be obtained by the first device in a service planning phase, or may be obtained by using a telemetry (telemetry) technology. The processing delay of the device is a device indicator parameter, and the first device may obtain the processing delay by reporting by the device, or store the processing delay in a database of the first device as a static parameter. The interface delay refers to a maximum delay required for a packet to pass through a port at a certain rate on a device in a store-and-forward working mode. For example, interface delay = maximum packet length/interface bandwidth. In another example, the fixed delay $D_f$ further includes an initial delay $T_\beta$ of a scheduler. The initial delay $T_\beta$ refers to a queue delay faced by the service flow because a plurality of service flows in the scheduler compete for dequeuing. The initial delay is defined as a maximum initial when a service flow waits to be scheduled by the scheduler.

For example, for an electric power differential protection service shown in FIG. 2, an end-to-end delay threshold of a service flow from a device A to a device E in a bearer network is D = 2 ms. The optical fiber delay on the service flow transmission path is 1.1 ms, and a processing delay of a single device is 25 μs. Interface delay of a single device = maximum packet length/port bandwidth = 400Byte/1G = 3.2 μs. The service flow transmission path passes through five forwarding devices. The fixed delay $D_f$ = 1.1 ms + 25 μs * 5 + 3.2 μs * 5 = 1.231ms. In addition, if devices A to E use strict priority scheduling (strict priority, SP) to send service flows, initial delay = maximum burst length/port bandwidth,

that is, $T_\beta$ = 14*400Byte/1G = 44.8 μs. The total initial delay is 5 * $T_\beta$ = 224 μs. Therefore, the delay threshold for a single network device to transmit service flows is D' = 2ms - 1.231 ms - 0.224 ms = 0.545 ms.

If the first device obtains the reliability probability P that meets the end-to-end service flow transmission delay threshold D before the first device obtains the reliability probability P' that meets the delay threshold D', the first device determines the reliability probability P' based on the quantity of devices on the transmission path of the service flow and the reliability probability P. For example, the first device obtains a reliability probability P' = 1 - (1 - p)$^{1/H}$ according to a formula, where H is a quantity of devices on the transmission path of the service flow.

It should be understood that, based on the delay threshold D' of the single device and the reliability probability P' that meets the delay threshold D' that are obtained by using the foregoing method, the first bandwidth is obtained with reference to the method in scenario 1.

Scenario 3: A first device obtains a buffer threshold B of a single device that transmits a service flow and a reliability probability P' that meets the buffer threshold B.

In an implementation, by using step 302, a traffic sampling set obtained by the first device includes $A_i$, $A_{i+1}$ ... $A_j$ and a timestamp $T_k$ corresponding to obtaining traffic sampling information, where $1 \leq i \leq j \leq N$, and i and j are integers. $A_i$ is a total length of a packet that belongs to the service flow in an i$^{th}$ piece of traffic sampling information, and $A_{i+1}$ is a total length of a packet that belongs to the service flow in an (i+1)$^{th}$ piece of traffic sampling information; and $A_j$ is a total length of a packet that belongs to the service flow in a j$^{th}$ piece of traffic sampling information. The device selects, based on the obtained traffic sampling information, several groups of adjacent traffic sampling information, to obtain an accumulated length $S_{ij} = A_i + A_{i+1} + \cdots + A_j$ of arrived packets. The first device obtains an instantaneous bandwidth of the service flow based on the accumulated length $S_{ij}$ of the arrived packets, a sampling period $\Delta T_k = T_k - T_{k-1}$, and a buffer threshold B of a single device. The first device obtains a first bandwidth based on the instantaneous bandwidth and the reliability probability P'. It should be understood that when i=j, it indicates that the first traffic sampling set obtained by the first device includes one piece of traffic sampling information. In this case, the first device selects, based on the obtained traffic sampling information, several groups of adjacent traffic sampling information, to obtain an accumulated length $S_{ij} = A_i$ of arrived packets.

Further, for example, in an implementation, that the first device obtains the instantaneous bandwidth of the service flow based on the accumulate length $S_{ij}$ of the arrived packets, the sampling period $\Delta T_k = T_k - T_{k-1}$, and the buffer threshold B of the single device includes: The first device obtains the instantaneous bandwidth BW' = ($S_{ij}$ - B)/((j - i + 1)T) according to a formula, where T is a difference between timestamps corresponding to two adjacent times of traffic sampling information or is a specified period for obtaining traffic sampling information. An implementation in which the first device obtains the first bandwidth based on the instantaneous bandwidth and the reliability probability includes: The first device sorts the obtained instantaneous bandwidth BW' in ascending order to obtain a vector ρ, and uses a value a corresponding element ranking M = N(N + 1)/2 × P' as a value for transmitting the first bandwidth, where a value corresponding to M is a first bandwidth.

Scenario 4: A first device obtains a delay jitter threshold $D_{jitter}$ and a reliability probability P' for transmitting a service flow.

In an implementation, if an upper bound $D_{jitter}$ of a delay jitter of a single device is provided, the upper bound is used as a delay threshold D' of the single device, and a first bandwidth is obtained according to the method shown in scenario 1.

It may be understood that a bandwidth calculation method in the foregoing four scenarios may run on programmable traffic management (Programmable Traffic Management, PTM), or may run on the first device. The first device performs, based on the obtained first bandwidth, resource deployment on a device for transmitting the service flow in a network, to provide the service with a differentiated service of an SLA, and this improves reliability of transmitting the service flow.

In an example, a second device on a transmission path of the service flow collects the service flow again to obtain a second traffic sampling set, determines a second bandwidth based on the second traffic sampling set, a service level parameter, and a reliability probability of transmitting the service flow that meets the service level parameter, and configures, based on the second bandwidth, a bandwidth for transmitting the service flow. A method for determining the second bandwidth by the second device, refer to the methods described in the foregoing four scenarios.

The following separately describes two implementations based on different deployment forms of the first device.

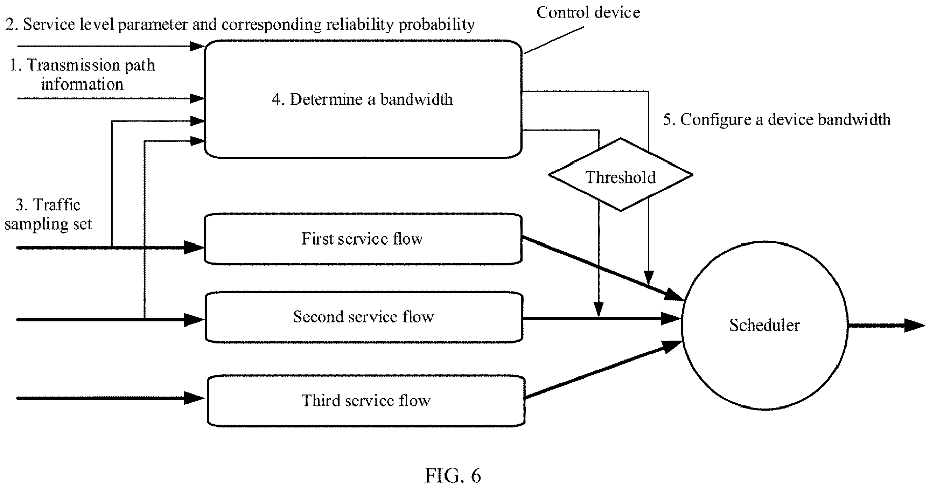

In this implementation, a control device is an independent device. As shown in FIG. 1 and FIG. 2, the control device is independent of another device in the network. A control device implements device management and resource deployment by communicating with a device for transmitting a service flow. As shown in FIG. 6, a method for determining a bandwidth for service flow transmission is provided. There are a plurality of service flows in FIG. 6, which are respectively a first service flow, a second service flow, and a third service flow. The first service flow and the second service flow are delay-sensitive services, a transmission process requirement is low delay and high reliability, and the third service flow is a delay-insensitive service. A method for determining a transmission bandwidth of the first service flow or the second service flow includes the following steps.

Step 1: The control device obtains transmission path information of a service flow.

The control device obtains a transmission path of the service flow by using a multiprotocol label switching (Multiprotocol Label Switching, MPLS) or traffic engineering (traffic engineering, TE) technology, and determines a device for transmitting the service flow on the transmission path. After determining the device on the path for transmitting the service flow, the control device may obtain network status information and device capability information based on a network configuration protocol (network configuration protocol, NETCONF) or a representational state transfer configuration protocol (Representational State Transfer Configuration Protocol, RESTCONF), for example, obtain information such as a port rate, a maximum available bandwidth of a link, a maximum remaining bandwidth of the link, a weight of the link, a maximum transmission unit (Maximum Transmission Unit, MTU) of the link, a scheduling method and parameter of the device, a processing delay of the device, and a buffer capability of the device. For example, the control device obtains the network status information and the device capability information by using NETCONF/YANG or RESTCONF/YANG. It should be understood that the control device may deploy network resources based on the network status information and the device capability information.

Step 2: The control device obtains a service level parameter of the service flow and a corresponding reliability probability.

An SLA indicator includes the service level parameter corresponding to the service flow and a reliability probability of meeting the service level parameter. In one aspect, the control device locally obtains the service level parameter of the service flow and the reliability probability of meeting the service level parameter. For example, the control device obtains, based on a correspondence between a service type of a service flow that is stored by the control device and content of the SLA, a service level parameter corresponding to the service flow and a reliability probability of meeting the service level parameter. With reference to Table 1, the control device stores a correspondence between a service flow and an SLA indicator. For example, the first service flow is a VR service flow, the second service flow is a high-definition video service flow, and the third service flow is a web browsing service flow. It should be understood that the first service flow and the second service flow are delay-sensitive services, and the third service flow is a delay-insensitive service. Therefore, the third service flow has no SLA indicator requirement. In another aspect, the control device may further receive an SLA indicator that is of a service flow and that is sent by another device. For example, the control device determines, based on obtained network topology information, a path for transmitting the service flow and one or more devices on the transmission path. The control device obtains the SLA indicator of the service flow from the device on the transmission path. For example, the network device 102 in FIG. 1 sends the SLA indicator of the service flow to the control device.

**Table 1**

| Service type of a service flow | SLA indicator |
| --- | --- |
| First service flow | A threshold of a single network device is 0.1 ms, and a reliability probability is 0.9 |
| Second service flow | An end to end delay threshold is 1s, and a reliability probability is 0.6 |
| Third service flow | None (delay-insensitive services) |

With reference to the foregoing implementation in which the control device obtains the SLA indicator from the network device that transmits the service flow, the network device may use, by using a user network interface (User Network Interface, UNI), a multiple registration protocol (multiple registration protocol, MRP) packet, a link-local registration protocol (link-local registration protocol, LRP) packet, a network configuration protocol (Network Configuration Protocol, NETCONF) packet, a RESTCONF packet, a management information base (management information base, MIB) packet, or the like to obtain the SLA indicator.

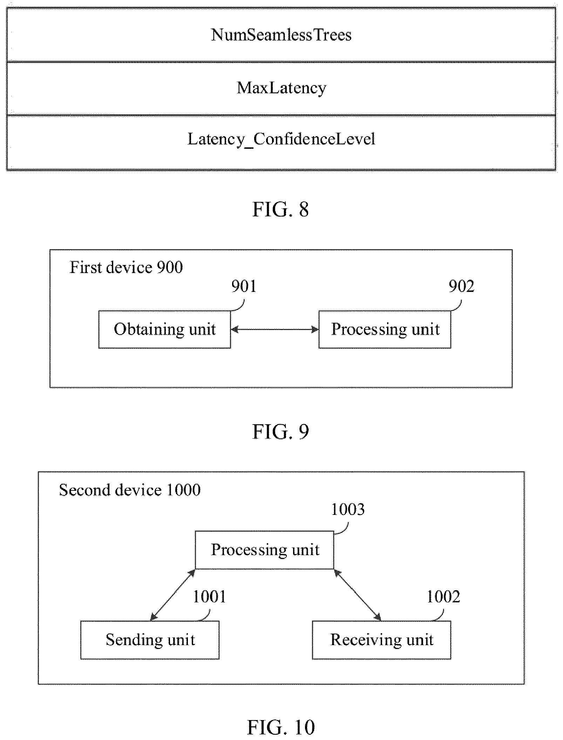

For example, FIG. 8 is a schematic diagram of a format of a packet carrying an SLA indicator of a service flow according to an embodiment of this application. In UserToNetworkRequirements TLV shown in FIG. 8, a field MaxLatency carries a delay threshold, and a newly added field Latency_ConfidenceLevel carries a reliability probability. If a value of the field Latency_ConfidenceLevel is 999900, it means that a user accepts that a network guarantee transmission delay is less than or equal to a delay threshold carried in MaxLatency in the case of 99.99%. The network device may register an SLA indicator of a service flow carried in UserToNetworkRequirements TLV with an MPR data unit (MRP Data Unit, MRPDU) of the network device, generate a declaration (declaration), and send the declaration to the control device. The network device may alternatively register an SLA indicator of a service flow carried in UserToNetworkRequirements TLV with a database of an LRP, generate a declaration (declaration), and send the declaration to the control device.

In an implementation, with reference to an implementation in which the control device obtains the SLA indicator from the network device that transmits the service flow, the device on the transmission path may further send, to the control device via a centralized user configuration (Centralized User Configuration, CUC) device, the service level parameter of the service flow and the reliability probability of meeting the service level parameter.

In an implementation, the control device may receive SLA indicators of one or more different service flows. Different service flows may be distinguished from each other depending on whether the service flows have a same quality of service (quality of service, Qos) parameter, for example, depending on whether the service flows have a same delay, jitter, or throughput. Service flows with a same QoS parameter belong to a same service flow.

Step 3: The control device receives the traffic sample set sent by the device on the transmission path of the service flow.

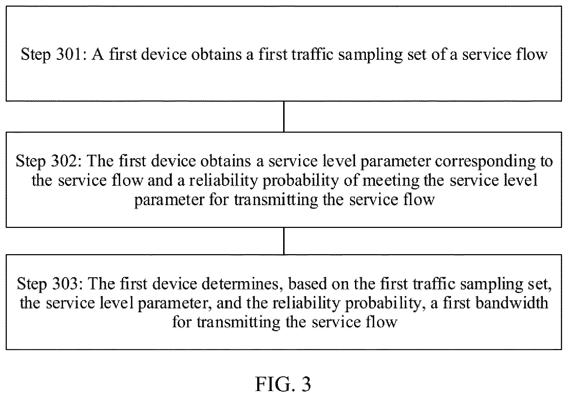

If the control device obtains service level parameters of a plurality of different service flows and reliability probabilities that meet the service level parameters, the control device needs to separately sample the plurality of different service flows to obtain a plurality of traffic sampling sets. For example, as shown in Table 1, the network device separately samples a VR service flow and a high-definition video conference, to separately obtain a first traffic sampling set and a second traffic sampling set, and the network device sends the first traffic sampling set and the second traffic sampling set to the control device. For a specific sampling method and content of the traffic sampling set, refer to related descriptions of step 302 in FIG. 3.

Step 4: The control device determines, based on the traffic sampling set and the SLA indicator, a bandwidth for transmitting the service flow by the device.

If the SLA indicator of the service flow includes the delay threshold and the reliability probability of the single device that transmit the service flow, the bandwidth of the service flow is obtained with reference to the method in scenario 1 in step 303.

If the SLA indicator of the service flow includes the end-to-end delay threshold and the reliability probability of transmitting the service flow, the bandwidth of the service flow is obtained with reference to the method in scenario 2 in step 303.

If the SLA indicator of the service flow includes the buffer threshold of the single device that transmits the service flow and the reliability probability, the bandwidth of the service flow is obtained with reference to the method in scenario 3 in step 303.

If the SLA indicator of the service flow includes the delay jitter threshold of the single device that transmits the service flow and the reliability probability, the bandwidth of the service flow is obtained with reference to the method in scenario 4 in step 303.

Step 5: The control device configures the device bandwidth.

The control device configures resources of the device using the bandwidth obtained in step 4. In an example, the control device delivers the bandwidth to the device by using a committed information rate (committed information rate, CIR) of a scheduler instance (scheduler instance) of NETCONF/YANG or RESTCONF/YANG. If the device uses hierarchical scheduler (Hierarchical Scheduler), a service flow having an SLA requirement is set to a high priority, for example, an expedited forwarding EF (expedited forwarding, EF) priority, and a CIR value is configured as a bandwidth value obtained from the control device. In an example, for a case in which the device performs scheduling by using bandwidth sharing, for example, round robin scheduling (Round Robin, RR), deficit round robin (Deficit Round Robin, DRR), or weighted fair queuing (Weighted Fair Queuing, WFQ), the device obtains a bandwidth weight r of the scheduler according to $R*r=BW$, where R is a total scheduled bandwidth (unit: bit/s), and BW is a bandwidth value obtained by the device from the control device. The device transmits the service flow according to the scheduling weight r. In an example, in a case of hybrid bearing of a plurality of types of services, for different service types, bandwidths corresponding to the services are separately obtained according to the foregoing steps. The device configures parameters of the device scheduler based on the bandwidth corresponding to the service, and sets the bandwidth for the corresponding service.

In an implementation, network slicing is an important feature of a 5G (5th generation) network, and network slicing is an on-demand networking manner. For example, different from a physical network, network slicing is a virtual end-to-end network topology. Different network slices can be logically isolated to adapt to different policies, especially differentiated network assurance for service-oriented services. For example, the control device or a management device of a target slice sets, based on a mapping relationship between the target network slice and the service flow, the calculated bandwidth as a preset bandwidth for transmitting the service flow by the target network slice. In an example, for a single network slice, a mapping relationship is established between a service flow and a network slice based on a service type, and a bandwidth obtained from a control device is set as a bandwidth of a service flow for transmitting the service by the network slice. For example, a bandwidth for transmitting the service flow on an interface of a device in the network slice is configured as a bandwidth obtained from the control device.

In an implementation, the device uses the bandwidth obtained from the control device as an initial bandwidth, runs an initial algorithm for calculating the bandwidth on the control device, calculates a bandwidth vector $\rho$ of the initial bandwidth, for example, sorts instantaneous bandwidths calculated by the control device in the foregoing four scenarios in ascending order or descending order, and delivers the instantaneous bandwidths to devices on the service flow path. The device samples a new service flow to obtain new sampling information, and runs the algorithm described in step 303 in FIG. 3 on local PTM (Programmable Traffic Management) of the device based on the bandwidth vector $\rho$ and

new sampling information, to obtain an updated bandwidth value. The updated bandwidth value obtained by the device can be used as a reference for configuring a bandwidth of the device. This method is applicable to the following scenarios: fast-changing traffic, characteristics of traffic may change after passing through a device, monitoring is required by a hop-by-hop device, an initial phase of running of an algorithm, or a reliability probability requirement is high. The algorithm is quickly updated to monitor traffic in real time, to obtain SLA bandwidth resources that adapt to traffic characteristics.

In a possible implementation, the device uses the bandwidth obtained from the control device as the initial bandwidth, and performs update calculation on the initial bandwidth based on the new sampling information of the service flow to obtain the updated bandwidth value. For a method for the update calculation, refer to the algorithm described in step 303 in FIG. 3. To avoid frequent flapping of a bandwidth configuration caused by frequent changes of bandwidth calculation results, in an example, the device determines, based on an average of the initial bandwidth and the updated bandwidth value, the bandwidth for transmitting the service flow. In an example, the device sets a bandwidth threshold $BW_{th}$ or a time threshold $T_{th}$. If the updated bandwidth value is greater than or equal to the bandwidth threshold, the device adjusts, based on the updated bandwidth value, the bandwidth for transmitting the service flow. Further, if the updated bandwidth value is greater than or equal to the bandwidth threshold within the time threshold, the network adjusts, based on the updated initial bandwidth value, the bandwidth for transmitting the service flow. For example, a difference between the updated bandwidth BW(n) and BW(n-1) output by a previous update algorithm is greater than the bandwidth threshold: $BW(n) - BW(n-1) \geq BW_{th}$, and the updated bandwidth BW(n) is adjusted to the bandwidth for transmitting the service flow. Alternatively, if the updated bandwidth BW(n) remains stable for a period of time, that is, BW(n+1) = BW(n+2), duration is $T_{th}$, the device bandwidth is configured according to BW(n). For a device with a total bandwidth of 10 G, the bandwidth threshold may be $BW_{th}$ = 100Mbps, and the time threshold is 1s. When duration in which the updated bandwidth is greater than or equal to the bandwidth threshold is longer than the time threshold 1s, the device adjusts the bandwidth for transmitting the service flow based on the updated bandwidth value. In an example, the determined bandwidth BW may alternatively be amplified by a specific coefficient to configure the bandwidth for transmitting the service flow by the device, so that the configured bandwidth is secure and reliable. For example, the device bandwidth is configured based on BW*1.2.

In an implementation, the control device periodically detects whether the deployed bandwidth can meet the SLA indicator requirement of the service flow. In addition, a telemetry technology may be used to detect transmission delays of packets of some service flows on a given path, and the control device compares whether the transmission delays obtained through telemetry are less than or equal to a delay threshold specified in the SLA of the service. If a comparison result is "no", it is determined that the deployed bandwidth is insecure. In another method, the control device runs a network calculus (network calculus, NC) tool to calculate a theoretical upper bound of a delay in a preset bandwidth, and the controller compares whether the theoretical upper bound of the NC is less than a delay threshold specified in the SLA. If a comparison result is "yes", the deployed bandwidth meets the SLA requirements.

According to the foregoing method, the control device determines, based on the sampling information of the service flow, the service level parameter, and the reliability probability of meeting the service level parameter, the bandwidth required for transmitting the service flow, to guide bandwidth allocation to a delay-sensitive service having a reliability probability requirement. This improves reliability of transmission of the delay-sensitive service flow.

In this implementation, the control device is a functional unit and is integrated into a device on a service flow transmission path. As shown in FIG. 1, the control unit is integrated into any one of the devices 102 to 104, or the control unit is split into several functional sub-units and deployed on the devices 102 to 104 in a distributed manner, to implement device management and resource deployment. The following steps are specifically included.

Step 11: The device obtains a service level parameter of the service flow and a corresponding reliability probability.

In an implementation, when the control unit is integrated into a device on a transmission path of a service flow, it may be understood that the device may obtain, through a user network interface (User Network Interface, UNI), a packet that carries a service level parameter of the service flow and a reliability probability of meeting the service level parameter. For example, the packet that carries the service level parameter of the service flow and the reliability probability of meeting the service level parameter is a multiple registration protocol (multiple registration protocol, MRP) packet, a local link registration protocol (link-local registration protocol, LRP) packet, a network configuration protocol (Network Configuration Protocol, NETCONF) packet, a RESTCONF packet, a management information base (management information base, MIB) packet, or the like. In a possible implementation, control units are deployed on devices on a transmission path of the service flow in a distributed manner, and the devices obtain, from a local device, SLA content corresponding to the service flow. The NETCONF may use the Secure Shell Protocol (Secure Shell, SSH), the Transport Layer Security (Transport Layer Security, TLS), or the Transmission Control Protocol (Transmission Control Protocol, TCP) to carry the service level parameter of the service flow with the SLA and the reliability probability of meeting the service level parameter.

Step 12: The device samples the service flow to obtain a traffic sampling set.

If the device obtains SLAs of a plurality of different services, the device needs to separately collect service flows of the plurality of different services to obtain a plurality of traffic sampling sets.

For example, as shown in Table 1, the device separately collects a VR service flow and a high-definition video conference, to separately obtain a traffic sampling set of the VR service flow and a traffic sampling set of the high-definition video conference. For a sampling method, refer to the method shown in step 302 in FIG. 3.

Step 13: The device obtains a bandwidth based on the sampling information, the service level parameter, and the corresponding reliability probability.

If the SLA content of the service flow includes the delay threshold and the reliability probability of the single device that transmits the service flow, the bandwidth of the service flow is obtained with reference to the method in scenario 1.

If the SLA content of the service flow includes the end-to end delay threshold and the reliability probability of transmitting the service flow, the bandwidth of the service flow is obtained with reference to the method in scenario 2.

If the SLA content of the service flow includes the buffer threshold and the reliability probability of the single device that transmits the service flow, the bandwidth of the service flow is obtained with reference to the method in scenario 3.

If the SLA content of the service flow includes the buffer threshold and the reliability probability of the single device that transmits the service flow, the bandwidth of the service flow is obtained with reference to the method in scenario 3.

If the SLA content of the service flow includes the delay jitter threshold and the reliability probability that transmits the service flow, the bandwidth of the service flow is obtained with reference to the method in scenario 4.

Step 14: The device configures the bandwidth for the service flow.

The device configures the bandwidth for the service flow based on the bandwidth obtained in step 13. For a configuration method, reference may be made to the descriptions of step 5 in FIG. 6.

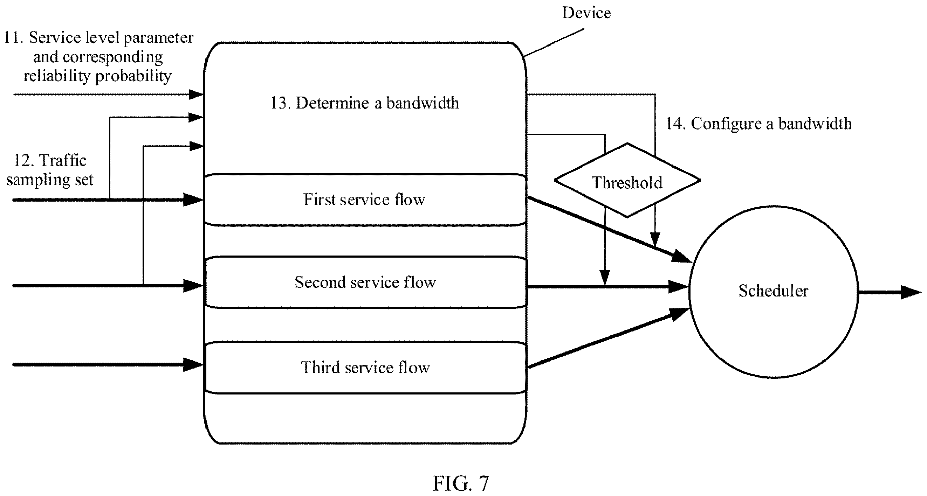

FIG. 9 is a schematic diagram of a structure of a first device 900 according to an embodiment of this application. The first device 900 shown in FIG. 9 may perform corresponding steps performed by the first device or the control device in the method in the foregoing embodiment. For example, the first device 900 may perform the method steps performed by the first device in steps 301 to 303 in FIG. 3, the method steps performed by the control device in steps 1 to 5 in FIG. 6, and the method steps performed by the device in steps 11 to 14 in FIG. 7. As shown in FIG. 9, the first device 900 includes an obtaining unit 901 and a processing unit 902. The obtaining unit 901 is configured to obtain a first traffic sampling set of a service flow, a service level parameter corresponding to the service flow, and a reliability probability of meeting the service level parameter, where the first traffic sampling set includes one or more pieces of traffic sampling information. The processing unit 902 is configured to determine, based on the first traffic sampling set, the service level parameter, and the reliability probability, a first bandwidth for transmitting the service flow.

In an implementation, the obtaining unit 901 is specifically configured to receive the first traffic sampling set from a second device, where the second device is a device on a transmission path of the service flow.

In an implementation, the first device may further include a first sending unit, and the first sending unit is configured to send an advertisement packet to the second device, where the advertisement packet carries the first bandwidth, the advertisement packet indicates the second device to set, based on the first bandwidth, a bandwidth for transmitting the service flow.

In an implementation, the obtaining unit 901 is specifically configured to obtain the first traffic sampling set collected by the first device. The processing unit 902 is further configured to set, based on the first bandwidth, a bandwidth for transmitting the service flow by the first device.

In an implementation, each of the one or more pieces of traffic sampling information includes a total length of a packet that is of the service flow and that is obtained within a specified period.

In an implementation, the obtaining unit 901 is specifically configured to obtain a first delay threshold for transmitting the service flow by a single device on the path for transmitting the service flow and a first reliability probability of meeting that a delay for transmitting the service flow by the single device is less than or equal to the first threshold, where the first delay threshold is a maximum delay for transmitting the service flow by the single device; and/or

obtain a first buffer threshold of a single device on the path for transmitting the service flow and a second reliability probability that a buffer of the single device is greater than or equal to the first buffer threshold, where the first buffer threshold is a minimum value of the buffer of the single device.

In an implementation, the processing unit 902 is specifically configured to obtain N pieces of traffic sampling information based on the first traffic sampling set, where the N pieces of traffic sampling information include $A_i$, $A_{i+1}$ ... $A_j$, where $1 \leq i \leq j \leq N$, and i and j are integers, $A_i$ is a total length of a packet that belongs to the service flow in a $i^{th}$ piece of traffic sampling information, $A_{i+1}$ is a total length of a packet that belongs to the service flow in an $(i+1)^{th}$ piece of traffic sampling information, and $A_j$ is a total length of a packet that belongs to the service flow in a $j^{th}$ piece of traffic sampling information. The processing unit 902 is specifically configured to obtain the accumulated packet length in the one or more service flows according to $S_{ij} = A_i + A_{i+1} + \cdots + A_j$. The processing unit 902 is specifically configured to obtain an instantaneous bandwidth of the service flow based on the one or more accumulated packet lengths and the service level parameter. The processing unit 902 is specifically configured to obtain the first bandwidth based on the instantaneous bandwidth and the reliability probability.

In an implementation, when the service level parameter includes the first delay threshold, the reliability probability includes the first reliability probability, and the first traffic sampling set further includes a timestamp for obtaining each piece of traffic sampling information. The processing unit 902 is specifically configured to obtain the instantaneous bandwidth according to a formula BW' = $S_{ij}/((j - i + 1)T + D')$, where D' is the first delay threshold, T is a difference between timestamps corresponding to two adjacent times of traffic sampling information, and BW' is the instantaneous bandwidth. The processing unit 902 is specifically configured to sort values of the instantaneous bandwidth in ascending order, and determine that a value corresponding to an M = N(N + 1)/2 × P' element is the first bandwidth, where a value corresponding to M is the value of the first bandwidth, and P' is the first reliability probability.

In an implementation, when the service level parameter includes the first buffer threshold, the reliability probability includes the second reliability probability, and the first traffic sampling set further includes a timestamp for obtaining each piece of traffic sampling information. The processing unit 902 is specifically configured to obtain the instantaneous bandwidth according to a formula BW' = $(S_{ij} - B)/((j - i + 1)T)$, where B is the first buffer threshold, T is a difference between timestamps corresponding to two adjacent times of traffic sampling information, and BW' is the instantaneous bandwidth. The processing unit 902 is specifically configured to sort values of the instantaneous bandwidth in ascending order, and determine that a value corresponding to an M = N(N + 1)/2 × P' element is the first bandwidth, where a value corresponding to M is the value of the first bandwidth, and P' is the second reliability probability.

In an implementation, before the obtaining unit 901 obtains a first delay threshold for transmitting the service flow by a single device on the path for transmitting the service flow and a first reliability probability of meeting that a delay for transmitting the service flow by the single device is less than or equal to the first threshold, the obtaining unit is further configured to obtain a second delay threshold for end-to-end transmission of the service flow and a third reliability probability that a delay of end-to-end transmission of the service flow is less than or equal to the second delay threshold. The processing unit 902 is further configured to determine the first delay threshold based on a quantity of devices on the transmission path of the service flow and the second delay. The processing unit 902 is further configured to determine the first reliability probability based on the quantity of devices on the transmission path of the service flow and the third reliability probability.

In an implementation, the processing unit 902 is specifically configured to determine the first delay threshold according to the following formula.

$$D' = (D - D_f)/H$$

D' is the first delay threshold, H is a quantity of devices on the transmission path of the service flow, D is the second delay threshold, $D_f$ is a fixed delay on the transmission path of the service flow, and the fixed delay includes at least one of the following delays: a link delay on the transmission path of the service flow, a processing delay of a device, an outbound interface delay of a device, or an initial delay of a device.

In an implementation, the processing unit 902 is specifically configured to determine the first reliability probability according to the following formula:

$$P' = 1 - (1 - p)^{1/H}$$

P' is the first reliability probability, H is a quantity of devices on the transmission path of the service flow, and p is the third reliability probability.

In an implementation, the first device further includes a second sending unit, and the second sending unit is configured to send the instantaneous bandwidth of the service flow to a third device, where the instantaneous bandwidth is used for determining a second bandwidth by the third device based on the instantaneous bandwidth.

FIG. 10 is a schematic diagram of a structure of a second device 1000 according to an embodiment of this application. The second device 1000 shown in FIG. 10 may perform corresponding steps performed by the second device in the method in the foregoing embodiment. For example, the first device 900 may perform the method steps performed by the second device described in the embodiment of steps 301 to 303 in FIG. 3. The second device is deployed in a communication network, and the communication network further includes a control device. As shown in FIG. 10, the second device 1000 includes a sending unit 1001, a receiving unit 1002 and a processing unit 1003. The sending unit 1001 is configured to send a first traffic sampling set of a service flow to a first device, where the first traffic sampling set includes one or more pieces of traffic sampling information, the first traffic sampling set is used for determining a first bandwidth by the first device. The receiving unit 1002 is configured to receive an advertisement packet from the first device, where the advertisement packet includes the first bandwidth. The processing unit 1003 is configured to set, based on the first bandwidth, a bandwidth for transmitting the service flow.

In an implementation, the sending unit 1001 is further configured to send, to the first device, a service level parameter of the service flow and a reliability probability of meeting the service level parameter, where the service level parameter and the reliability probability are used for determining the first bandwidth by the first device.

In an implementation, each of the one or more pieces of traffic sampling information includes a total length of a packet that is of the service flow and that is obtained within a specified period.

In an implementation, the sending unit 1001 is specifically configured to: send, to the first device, a first delay threshold for transmitting the service flow by a single device on the path for transmitting the service flow and a first reliability probability of meeting that a delay for transmitting the service flow by the single device is less than or equal to the first threshold, where the first delay threshold is a maximum delay for transmitting the service flow by the single device; and/or

send, to the first device, a first buffer threshold of a single device on the path for transmitting the service flow and/or a second reliability probability that a buffer of the single device is greater than or equal to the first buffer threshold, where the first buffer threshold is a minimum value of the buffer of the single device.

In an implementation, the sending unit 1001 is specifically configured to send, to the first device, a second delay threshold for end-to-end transmission of the service flow and a third reliability probability that a delay of end-to-end transmission of the service flow is less than or equal to the second delay threshold.

In an implementation, the processing unit 1003 is specifically configured to set a value of a committed information rate CIR of a port for transmitting the service flow to a value of the first bandwidth, and send the service flow based on the CIR.

In an implementation, the processing unit 1003 is specifically configured to: set, based on a port bandwidth for transmitting the service flow and the first bandwidth, a scheduling weight value for transmitting the service flow, and send the service flow based on the scheduling weight value.

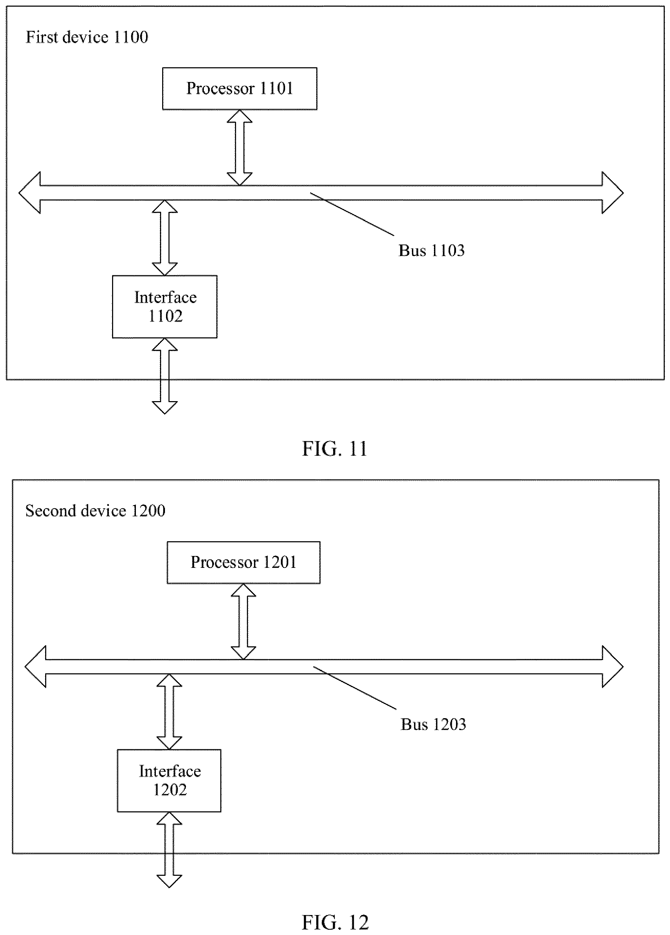

FIG. 11 is a schematic diagram of a hardware structure of a first device 1100 according to an embodiment of this application. The first device 1100 shown in FIG. 11 may perform corresponding steps performed by the first device in the method in the foregoing embodiment. Refer to FIG. 11. The first device 1100 includes a processor 1101, a communication interface 1102, and bus 1103. The processor 1101 is connected to the interface 1102 through the bus 1103.

In an implementation, the interface 1103 includes a transmitter and a receiver, and is configured to receive and send a packet between the device 1100 and the second device in the foregoing embodiment or between the device 1100 and another network device on a service flow transmission path. For example, the interface 1103 is configured to support steps 301 and 302 in FIG. 3, steps 1 to 3 and step 5 in FIG. 6, and steps 11 to 12 and step 14 in FIG. 7. The processor 1101 is configured to perform processing performed by the first device in the foregoing embodiments, and/or is configured to perform another process of the technology described in this specification. For example, the processor 1101 is configured to determine, based on a first traffic sampling set, a service level parameter, and a reliability probability of meeting the service level parameter for transmitting the service flow, the first bandwidth for transmitting the service flow. For example, the processor 1101 is configured to support step 203 in FIG. 2, step 4 in FIG. 6, and step 13 in FIG. 7.

In an implementation, the first device 1100 may alternatively include a memory. The memory may be configured to store a program, code, or instructions. When executing the program, the code, or the instructions, the processor or a hardware device may complete a processing process related to the first device in the method embodiments. Optionally, the memory may include a read-only memory (Read-only Memory, ROM) and a random access memory (Random Access Memory, RAM). The ROM includes a basic input/output system (Basic Input/Output System, BIOS) or an embedded system, and the RAM includes an application program and an action system. When the first device 1100 needs to be run, the BIOS or a bootloader in the embedded system that is built into the ROM is used to lead a system to start, and lead the first device 1100 to enter a normal running state. After entering the normal running state, the first device 1100 runs the application program and the action system in the RAM, to complete a processing process related to the first device or the controlling device in the method embodiment. It may be understood that FIG. 11 shows only a simplified design of the first device 1100. In actual application, the first device may include any quantity of interfaces, processors, or memories.

It should be understood that the processor may be a central processing unit (Central Processing Unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor or any conventional processor or the like. It should be noted that the processor may be a processor that supports an advanced reduced instruction set computing machines (advanced RISC machines, ARM) architecture.

Further, in an optional embodiment, the memory may include a read-only memory and a random access memory, and provide instructions and data for the processor. The memory may further include a nonvolatile random access memory. For example, the memory may further store information of a device type.

The memory may be a volatile memory or a nonvolatile memory, or may include both a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

FIG. 12 is a schematic diagram of a hardware structure of a second device 1200 according to an embodiment of this application. It may be understood that the second device is a device on a service flow transmission path. The second device 1200 shown in FIG. 12 may perform corresponding steps performed by the second device in the method in the foregoing embodiment. Refer to FIG. 12. The second device 1200 includes a processor 1201, an interface 1202, and bus 1203. The processor 1201 is connected to the interface 1202 through the bus 1203.

In an implementation, the interface 1201 includes a transmitter and a receiver, and is configured to receive and send a packet between the second device and the first device in the foregoing embodiment or between the second device and the controlling device in the foregoing embodiment. For example, the interface 1202 is configured to: send a first traffic sampling set of a service flow, where the first traffic sampling set includes one or more pieces of traffic sampling information, and the first traffic sampling set is used for determining a first bandwidth by the first device; and receive an advertisement packet from the first device, where the advertisement packet includes the first bandwidth. The processor 1201 is configured to perform processing performed by the second device in the foregoing embodiments, and/or is configured to perform another process of the technology described in this specification. For example, the processor 1201 is configured to set, based on the first bandwidth, the bandwidth for transmitting the service flow.

In an implementation, the second device 1200 may alternatively include a memory. Optionally, the memory may be configured to store a program, code, or instructions. When executing the program, the code, or the instructions, the processor or a hardware device may complete a processing process related to the first device in the method embodiments. Optionally, the memory 1202 may include a ROM and a RAM. The ROM includes a basic input/output system (Basic Input/Output System, BIOS) or an embedded system, and the RAM includes an application program and an action system. When the second device 1200 needs to be run, the BIOS or a bootloader in the embedded system that is built into the ROM is used to lead a system to start, and lead the second device 1200 to enter a normal running state. After entering the normal running state, the second device 1200 runs the application program and the action system in the RAM, to complete a processing process related to the second device in the method embodiment. It may be understood that FIG. 12 shows only a simplified design of the second device 1200. In actual application, the first device may include any quantity of interfaces, processors, or memories. It should be understood that the processor may be a CPU, or may be another general purpose processor, a DSP, an ASIC, an FPGA or another programmable logic device, a discrete gate or transistor logic device, a discrete hardware component, or the like. The general-purpose processor may be a microprocessor or any conventional processor or the like. It should be noted that the processor may be a processor that supports an ARM architecture.

Further, in an optional embodiment, the memory may include a read-only memory and a random access memory, and provide instructions and data for the processor. The memory may further include a nonvolatile random access memory. For example, the memory may further store information of a device type. The memory may be a volatile memory or a nonvolatile memory, or may include both a volatile memory and a nonvolatile memory. The non-volatile memory may be a ROM, a PROM, an EPROM, an EEPROM, or a flash memory. The volatile memory may be a RAM and is used as an external cache. By way of example but not limitation, many forms of RAMs may be used, for example, a static random access memory SRAM, a DRAM, an SDRAM, a DDR SDRAM, an ESDRAM, an SLDRAM, and a DR RAM.

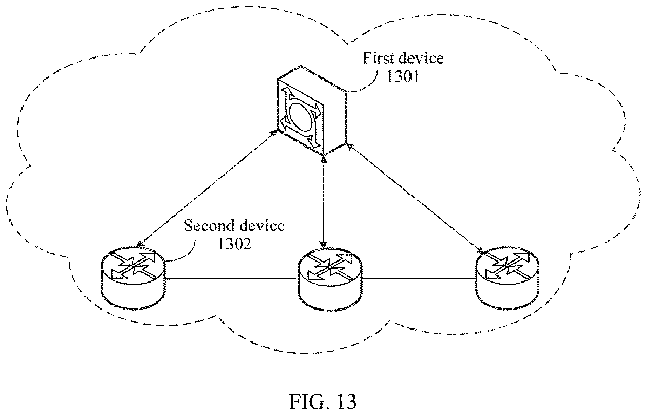

FIG. 13 is a schematic diagram of a structure of a system for determining a bandwidth for service flow transmission according to an embodiment of this application. The system 1300 is configured to implement the method for determining a bandwidth for service flow transmission in the foregoing method embodiments. The system includes a first device 1301 and a second device 1302. The first device may be configured to perform method steps of the first device, the control device, or the device in FIG. 3, FIG. 6, and FIG. 7, and has corresponding functions. The second device is configured to perform the steps performed by the second device that are described in the embodiments of steps 301 to 303, and has corresponding functions.

In an example, the first device 1301 is configured to: obtain a first traffic sampling set of a service flow, a service level parameter corresponding to a service flow, and a reliability probability of meeting the service level parameter; determine, based on the first traffic sampling set, the service level parameter of the service flow, and the reliability probability, a first traffic bandwidth for transmitting the service flow; and send the first bandwidth to the second device, where the first traffic sampling set includes one or more pieces of traffic sampling information. The second device 1302 is configured to: send the first traffic sampling set to the first device, receive a first bandwidth, and set, based on the first bandwidth, a bandwidth for transmitting the service flow.

An embodiment of this application further provides a computer-readable storage medium, including at least one piece of instruction, a program or code. When the instruction, the program or the code is run on a computer, the computer is enabled to perform the step of any one of the foregoing methods for determining a bandwidth for transmitting a service flow. For example, corresponding method steps in the method embodiments performed by the first device, the second device, the control device, or the device in the embodiments in FIG. 3, FIG. 6, or FIG. 7 may be performed.

An embodiment of this application provides a computer program product, including at least one piece of instruction, program, or code. When the instruction, program, or code is loaded and run on a computer, the computer is enabled to perform corresponding method steps in the method embodiments performed by the first device, the second device, the control device, or the device in the embodiments in FIG. 3, FIG. 6, or FIG. 7.

It should be noted that any apparatus embodiment described above is merely an example. The units described as separate parts may or may not be physically separate, and parts displayed as units may or may not be physical units, that is, may be located in one position, or may be distributed on a plurality of network units. Some or all the modules may be selected according to actual needs to achieve the objectives of the solutions of embodiments. In addition, in the accompanying drawings of the embodiments of a first network node or a controller provided in this application, a connection relationship between the modules indicates that there is a communication connection between the modules, and the communication connection may be specifically implemented as one or more communications buses or signal cables. A person of ordinary skill in the art may understand and implement embodiments of the present invention without creative efforts.

All or some of the foregoing embodiments may be implemented by software, hardware, firmware, or any combination thereof. When software is used to implement embodiments, all or some of the embodiments may be implemented in a form of a computer program product. The computer program product includes one or more computer instructions. When the computer program instructions are loaded and executed on the computer, the procedures or functions according to the embodiments of this present invention are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid-State Drive, SSD)), or the like.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communications medium, where the communications medium includes any medium that enables a computer program to be transmitted from one place to another. The storage medium may be any available medium accessible to a common definite purpose computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

**Claims**

1. A method for determining a bandwidth for service flow transmission, wherein the method comprises:

   obtaining, by a first device, a first traffic sampling set of a service flow, wherein the first traffic sampling set comprises one or more pieces of traffic sampling information;
   obtaining, by the first device, a service level parameter corresponding to the service flow and a reliability probability of meeting the service level parameter; and

determining, by the first device based on the first traffic sampling set, the service level parameter, and the reliability probability, a first bandwidth for transmitting the service flow.

2. The method according to claim 1, wherein the obtaining, by a first device, a first traffic sampling set comprises:
   receiving, by the first device, the first traffic sampling set sent by a second device.

3. The method according to claim 2, wherein the method further comprises:
   sending, by the first device, an advertisement packet to the second device, wherein the advertisement packet carries the first bandwidth, the advertisement packet indicates the second device to set, based on the first bandwidth, a bandwidth for transmitting the service flow, and the second device is a device on a transmission path of the service flow.

4. The method according to claim 1, wherein the obtaining, by a first device, a first traffic sampling set comprises:
   obtaining, by the first device, the first traffic sampling set collected by the first device; and
   the method further comprises: setting, by the first device based on the first bandwidth, a bandwidth for transmitting the service flow by the first device.

5. The method according to any one of claims 1 to 4, wherein each of the one or more pieces of traffic sampling information comprises a total length of a packet that is of the service flow and that is obtained within a specified period.

6. The method according to any one of claims 1 to 5, wherein the obtaining, by the first device, a service level parameter corresponding to the service flow and a reliability probability of meeting the service level parameter comprises:

   obtaining, by the first device, a first delay threshold for transmitting the service flow by a single device on the path for transmitting the service flow and a first reliability probability of meeting that a delay for transmitting the service flow by the single device is less than or equal to the first threshold, wherein the first delay threshold is a maximum delay for transmitting the service flow by the single device; and/or
   obtaining, by the first device, a first buffer threshold of a single device on the path for transmitting the service flow and a second reliability probability of meeting that a buffer of the single device is greater than or equal to the first buffer threshold, wherein the first buffer threshold is a minimum value of the buffer of the single device.

7. The method according to any one of claims 1 to 6, wherein the determining, by the first device based on the first traffic sampling set, the service level parameter, and the reliability probability, a first bandwidth for transmitting the service flow comprises:

   obtaining, by the first device, N pieces of traffic sampling information based on the first traffic sampling set, wherein the N pieces of traffic sampling information comprise $A_i, A_{i+1} ... A_j$, wherein $1 \leq I \leq j \leq N$, and i and j are integers, $A_i$ is a total length of a packet that belongs to the service flow in an $i^{th}$ piece of traffic sampling information, $A_{i+1}$ is a total length of a packet that belongs to the service flow in an $(i+1)^{th}$ piece of traffic sampling information, and $A_j$ is a total length of a packet that belongs to the service flow in a $j^{th}$ piece of traffic sampling information;
   obtaining, by the first device, one or more accumulated packet lengths of the service flow based on $S_{ij} = A_i + A_{i+1} + ... + A_j$;
   obtaining, by the first device, an instantaneous bandwidth of the service flow based on the one or more accumulated packet lengths and the service level parameter; and
   obtaining, by the first device, the first bandwidth based on the instantaneous bandwidth and the reliability probability.

8. The method according to claim 7, wherein when the service level parameter comprises the first delay threshold, the reliability probability comprises the first reliability probability, and the first traffic sampling set further comprises a timestamp for obtaining each of the one or more pieces of traffic sampling information;

   the obtaining, an instantaneous bandwidth of the data flow based on the accumulated packet lengths and the service level parameter comprises:
   obtaining the instantaneous bandwidth according to a formula $BW' = S_{ij}/((j - i + 1)T + D')$, wherein D' is the first delay threshold, T is a difference between timestamps corresponding to two adjacent times of traffic sampling information, and BW' is the instantaneous bandwidth; and
   the obtaining, based on the instantaneous bandwidth and the reliability probability, a bandwidth for transmitting the data flow comprises:
sorting values of the instantaneous bandwidth in ascending order, and determining that a value corresponding to an element ranking M = N(N + 1)/2 × P' is the first bandwidth, wherein a value corresponding to M is a value of the first bandwidth, and P' is the first reliability probability.

9. The method according to claim 7, wherein when the service level parameter comprises the first buffer threshold, the reliability probability comprises the second reliability probability, and the first traffic sampling set further comprises a timestamp for obtaining each of the one or more pieces of traffic sampling information;

the obtaining, an instantaneous bandwidth of the data flow based on the accumulated packet lengths and the service level parameter comprises:
obtaining the instantaneous bandwidth according to a formula BW' = $(S_{ij}$ - B)/((j - i + 1)T), wherein B is the first buffer threshold, T is a difference between timestamps corresponding to two adjacent times of traffic sampling information, and BW' is the instantaneous bandwidth; and
the obtaining, based on the instantaneous bandwidth and the reliability probability, a bandwidth for transmitting the data flow comprises:
sorting values of the instantaneous bandwidth in ascending order, and determining that a value corresponding to an element ranking M = N(N + 1)/2 × P' is the first bandwidth, wherein a value corresponding to M is a value of the first bandwidth, and P' is the second reliability probability.

10. The method according to any one of claims 6 to 9, wherein before the obtaining, by the first device, a first delay threshold for transmitting the service flow by a single device on the path for transmitting the service flow and a first reliability probability of meeting that a delay for transmitting the service flow by the single device is less than or equal to the first buffer threshold, the method further comprises:

obtaining, by the first device, a second delay threshold for end-to-end transmission of the service flow and a third reliability probability that a delay of the end-to-end transmission of the service flow is less than or equal to the second delay threshold, wherein the second delay threshold is a maximum value of the end-to-end transmission of the service flow;
determining, by the first device, the first delay threshold based on a quantity of devices on the transmission path of the service flow and the second delay; and
determining, by the first device, the first reliability probability based on the quantity of devices on the transmission path of the service flow and the third reliability probability.

11. The method according to claim 10, wherein the determining, by the first device, the first delay threshold based on a quantity of devices on the transmission path of the service flow and the second delay comprises:

$$D' = (D - D_f)/H$$

wherein D' is the first delay threshold, H is the quantity of devices on the transmission path of the service flow, D is the second delay threshold, $D_f$ is a fixed delay on the transmission path of the service flow, and the fixed delay comprises at least one of the following delays: a link delay on the transmission path of the service flow, a processing delay of a device, an outbound interface delay of a device, or an initial delay of a device.

12. The method according to claim 10 or 11, wherein the determining, by the first device, the first reliability probability based on the quantity of devices on the transmission path of the service flow and the third reliability probability comprises:

$$P' = 1 - (1 - p)^{1/H}$$

wherein P' is the first reliability probability, H is the quantity of devices on the transmission path of the service flow, and p is the third reliability probability.

13. The method according to claim 7, wherein the method further comprises:
sending, by the first device, the instantaneous bandwidth of the service flow to a third device, wherein the instantaneous bandwidth is used for determining a second bandwidth by the third device based on the instantaneous bandwidth.

14. The method according to any one of claims 1 to 13, wherein the method further comprises:

obtaining, by the first device, a second traffic sampling set of the service flow;
determining, by the first device based on the second traffic sampling set, the service level parameter, and the reliability probability, a third bandwidth for transmitting the service flow; and
determining, by the first device in response that the first device determines that the third bandwidth is greater than or equal to a bandwidth threshold, to transmit the service flow by using the third bandwidth.

15. The method according to claim 14, wherein the determining, by the first device in response that the first device determines that the third bandwidth is greater than or equal to a bandwidth threshold, to transmit the service flow by using the third bandwidth comprises:
determining, by the first device in response that the first device determines that duration in which the third bandwidth is greater than or equal to the bandwidth threshold is greater than or equal to a time threshold, to transmit the service flow by using the third bandwidth.

16. A method for determining a bandwidth for service flow transmission, wherein the method comprises:

sending, by a second device, a first traffic sampling set of a service flow to a first device, wherein the first traffic sampling set comprises one or more pieces of traffic sampling information, the first traffic sampling set is used for determining a first bandwidth by the first device, and the second device is a device on a transmission path of the service flow;
receiving, by the second device, an advertisement packet from the first device, wherein the advertisement packet comprises the first bandwidth; and
setting, by the second device based on the first bandwidth, a bandwidth for transmitting the service flow.

17. The method according to claim 16, wherein the method further comprises:
sending, by the second device to the first device, a service level parameter of the service flow and a reliability probability of meeting the service level parameter, wherein the service level parameter and the reliability probability are for determining the first bandwidth.

18. The method according to claim 16 or 17, wherein each of the one or more pieces of traffic sampling information comprises a total length of a packet that is of the service flow and that is obtained within a specified period.

19. The method according to claim 17 or 18, wherein the sending, by the second device to the first device, a service level parameter of the service flow and a reliability probability of meeting the service level parameter comprises:

sending, by the second device to the first device, a first delay threshold for transmitting the service flow by a single device on the path for transmitting the service flow and a first reliability probability of meeting that a delay for transmitting the service flow by the single device is less than or equal to the first threshold, wherein the first delay threshold is a maximum delay for transmitting the service flow by the single device; and/or
sending, by the second device to the first device, a first buffer threshold of a single device on the path for transmitting the service flow and a second reliability probability that a buffer of the single device is greater than or equal to the first buffer threshold, wherein the first buffer threshold is a minimum value of the buffer of the single device.

20. The method according to claim 17 or 18, wherein the sending, by the second device to the first device, a service level parameter of the service flow and a reliability probability of meeting the service level parameter comprises:
sending, by the second device to the first device, a second delay threshold for end-to-end transmission of the service flow and a third reliability probability that a delay of end-to-end transmission of the service flow is less than or equal to the second delay threshold, wherein the second delay threshold is a maximum delay of end-to-end transmission of the service flow.

21. The method according to any one of claims 16 to 20, wherein the method further comprises:

obtaining, by the second device, a second traffic sampling set of the service flow;
determining, by the second device, a second bandwidth based on the second traffic sampling set, the service level parameter, and the reliability probability; and

determining, by the second device based on the first bandwidth and the second bandwidth, a bandwidth for transmitting the service flow.

22. The method according to claim 21, wherein the determining, by the second device, a second bandwidth based on the second traffic sampling set, the service level parameter, and the reliability probability comprises:

obtaining, by the second device, N pieces of traffic sampling information based on the second traffic sampling set, wherein the N pieces of traffic sampling information comprise $A_i$, $A_{i+1}$ ... $A_j$, wherein $1 \leq i \leq j \leq N$, and i and j are integers, $A_i$ is a total length of a packet that belongs to the service flow in an $i^{th}$ piece of traffic sampling information, $A_{i+1}$ is a total length of a packet that belongs to the service flow in an $(i+1)^{th}$ piece of traffic sampling information, and $A_j$ is a total length of a packet that belongs to the service flow in a $j^{th}$ piece of traffic sampling information;

obtaining, by the second device, one or more accumulated packet lengths of the service flow based on $S_{ij} = A_i + A_{i+1} + ... + A_j$;

obtaining, by the second device, an instantaneous bandwidth of the service flow based on the one or more accumulated packet lengths and the service level parameter; and

obtaining, based on the instantaneous bandwidth and the reliability probability, the second bandwidth for transmitting the service flow.

23. The method according to claim 22, wherein when the service level parameter comprises the first delay threshold, the reliability probability comprises the first reliability probability, and the second traffic sampling set further comprises a timestamp for obtaining each of the one or more pieces of traffic sampling information;

the obtaining, an instantaneous bandwidth of the data flow based on the accumulated packet lengths and the service level parameter comprises:

obtaining the instantaneous bandwidth according to a formula BW' = $S_{ij}/((j - i + 1)T + D')$, wherein D' is the first delay threshold, T is a difference between timestamps corresponding to two adjacent times of traffic sampling information, and BW' is the instantaneous bandwidth; and

the obtaining, based on the instantaneous bandwidth and the reliability probability, a bandwidth for transmitting the data flow comprises:

sorting values of the instantaneous bandwidth in ascending order, and determining that a value corresponding to an element ranking M = N(N + 1)/2 $\times$ P' is the second bandwidth, wherein a value corresponding to M is a value of the first bandwidth, and P' is the first reliability probability.

24. The method according to claim 22, wherein when the service level parameter comprises the first buffer threshold, the reliability probability comprises the second reliability probability, and the second traffic sampling set further comprises a timestamp for obtaining each of the one or more pieces of traffic sampling information;

the obtaining, an instantaneous bandwidth of the data flow based on the accumulated packet lengths and the service level parameter comprises:

obtaining the instantaneous bandwidth according to a formula BW' = $(S_{ij} - B)/((j - i + 1)T)$, wherein B is the first buffer threshold, T is a difference between timestamps corresponding to two adjacent times of traffic sampling information, and BW' is the instantaneous bandwidth; and

the obtaining, based on the instantaneous bandwidth and the reliability probability, a bandwidth for transmitting the data flow comprises:

sorting values of the instantaneous bandwidth in ascending order, and determining that a value corresponding to an element ranking M = N(N + 1)/2 $\times$ P' is the first bandwidth, wherein a value corresponding to M is a value of the first bandwidth, and P' is the second reliability probability.

25. The method according to any one of claims 16 to 24, wherein the setting, by the second device based on the first bandwidth, a bandwidth for transmitting the service flow comprises:

setting, by the second device, a value of a committed information rate CIR of a port for transmitting the service flow to the value of the first bandwidth, and sending the service flow based on the CIR.

26. The method according to any one of claims 16 to 25, wherein the setting, by the second device based on the first bandwidth, a bandwidth for transmitting the service flow comprises:

setting, by the second device based on a port bandwidth for transmitting the service flow and the first bandwidth, a scheduling weight value for transmitting the service flow, and sending the service flow based on the scheduling weight value.

27. The method according to any one of claims 16 to 26, wherein the method further comprises:
transmitting, by the second device based on a mapping relationship between an identifier of a network slice and the service flow, a bandwidth for transmitting the service flow by using the first bandwidth.

28. A first device, comprising an obtaining unit and a processing unit, wherein

the obtaining unit is configured to obtain a first traffic sampling set of a service flow, wherein the first traffic sampling set comprises one or more pieces of traffic sampling information;
the obtaining unit is further configured to obtain a service level parameter corresponding to the service flow and a reliability probability of meeting the service level parameter; and
the processing unit is configured to determine, based on the first traffic sampling set, the service level parameter, and the reliability probability, a first bandwidth for transmitting the service flow.

29. The first device according to claim 28, wherein the obtaining unit is specifically configured to receive the first traffic sampling set from a second device, wherein the second device is a device on a transmission path of the service flow.

30. The first device according to claim 29, wherein the first device further comprises a first sending unit, wherein the first sending unit is configured to send an advertisement packet to the second device, wherein the advertisement packet carries the first bandwidth, and the advertisement packet indicates the second device to set, based on the first bandwidth, a bandwidth for transmitting the service flow.

31. The first device according to claim 28, wherein the obtaining unit is specifically configured to obtain the first traffic sampling set collected by the first device; and
the processing unit is further configured to set, based on the first bandwidth, a bandwidth for transmitting the service flow by the first device.

32. The first device according to any one of claims 28 to 31, wherein each of the one or more pieces of traffic sampling information comprises a total length of a packet that is of the service flow and that is obtained within a specified period.

33. The first device according to any one of claims 28 to 32, wherein the obtaining unit is specifically configured to obtain a first delay threshold for transmitting the service flow by a single device on the path for transmitting the service flow and a first reliability probability of meeting that a delay for transmitting the service flow by the single device is less than or equal to the first threshold, wherein the first delay threshold is a maximum delay for transmitting the service flow by the single device; and/or
obtain a first buffer threshold of a single device on the path for transmitting the service flow and a second reliability probability that a buffer of the single device is greater than or equal to the first buffer threshold, wherein the first buffer threshold is a minimum value of the buffer of the single device.

34. The first device according to any one of claims 28 to 33, wherein the processing unit is specifically configured to:

obtain N pieces of traffic sampling information based on the first traffic sampling set, wherein the N pieces of traffic sampling information comprise $A_i$, $A_{i+1}$ ...$A_j$, wherein $1 \leq i \leq j \leq N$, and i and j are integers, $A_i$ is a total length of a packet that belongs to the service flow in an $i^{th}$ piece of traffic sampling information, $A_{i+1}$ is a total length of a packet that belongs to the service flow in an $(i+1)^{th}$ piece of traffic sampling information, and $A_j$ is a total length of a packet that belongs to the service flow in a $j^{th}$ piece of traffic sampling information;
obtain one or more accumulated packet lengths of the service flow based on $S_{ij} = A_i + A_{i+1} + ... + A_j$;
obtain an instantaneous bandwidth of the service flow based on the one or more accumulated packet lengths and the service level parameter; and
obtain the first bandwidth based on the instantaneous bandwidth and the reliability probability.

35. The first device according to claim 34, wherein when the service level parameter comprises the first delay threshold, the reliability probability comprises the first reliability probability, and the first traffic sampling set further comprises a timestamp for obtaining each of the one or more pieces of traffic sampling information; and
the processing unit is specifically configured to:

obtain the instantaneous bandwidth according to a formula BW' = $S_{ij}/((_j - i + 1)T + D')$, wherein D' is the first delay threshold, T is a difference between timestamps corresponding to two adjacent times of traffic sampling information, and BW' is the instantaneous bandwidth; and

sort values of the instantaneous bandwidth in ascending order, and determine that a value corresponding to an element ranking M = N(N + 1)/2 × P' is the first bandwidth, wherein a value corresponding to M is a value of the first bandwidth, and P' is the first reliability probability.

36. The first device according to claim 34, wherein when the service level parameter comprises the first buffer threshold, the reliability probability comprises the second reliability probability, and the first traffic sampling set further comprises a timestamp for obtaining each of the one or more pieces of traffic sampling information; and

the processing unit is specifically configured to:

obtain the instantaneous bandwidth according to a formula BW' = $(S_{ij} - B)/((j - i + 1)T)$, wherein B is the first buffer threshold, T is a difference between timestamps corresponding to two adjacent times of traffic sampling information, and BW' is the instantaneous bandwidth; and

sort values of the instantaneous bandwidth in ascending order, and determine that a value corresponding to an element ranking M = N(N + 1)/2 × P' is the first bandwidth, wherein a value corresponding to M is a value of the first bandwidth, and P' is the second reliability probability.

37. The first device according to any one of claims 33 to 36, wherein before the obtaining a first delay threshold for transmitting the service flow by a single device on the path for transmitting the service flow and a first reliability probability of meeting that a delay for transmitting the service flow by the single device is less than or equal to the first threshold, the obtaining unit is further configured to obtain a second delay threshold for end-to-end transmission of the service flow and a third reliability probability that a delay of end-to-end transmission of the service flow is less than or equal to the second delay threshold; and

the processing unit is further configured to:

determine the first delay threshold based on a quantity of devices on the transmission path of the service flow and the second delay; and

determine the first reliability probability based on the quantity of devices on the transmission path of the service flow and the third reliability probability.

38. The first device according to claim 37, wherein the processing unit is specifically configured to determine the first delay threshold according to the following formula:

$$D' = (D - D_f)/H$$

wherein D' is the first delay threshold, H is the quantity of devices on the transmission path of the service flow, D is the second delay threshold, $D_f$ is a fixed delay on the transmission path of the service flow, and the fixed delay comprises at least one of the following delays: a link delay on the transmission path of the service flow, a processing delay of a device, an outbound interface delay of a device, or an initial delay of a device.

39. The first device according to claim 37 or 38, wherein the processing unit is specifically configured to determine the first reliability probability according to the following formula:

$$P' = 1 - (1 - p)^{1/H}$$

wherein P' is the first reliability probability, H is the quantity of devices on the transmission path of the service flow, and p is the third reliability probability.

40. The first device according to claim 35 or 36, wherein the first device further comprises a second sending unit, wherein the second sending unit is configured to send the instantaneous bandwidth of the service flow to a third device, wherein the instantaneous bandwidth is used for determining a second bandwidth by the third device based on the instantaneous bandwidth.

41. A second device, wherein the second device is a device on a transmission path of a service flow, and the second device comprises a sending unit, a receiving unit, and a processing unit, wherein

the sending unit is configured to send a first traffic sampling set of the service flow, the first traffic sampling set comprises one or more pieces of traffic sampling information, and the first traffic sampling set is used for determining a first bandwidth by the first device;
the receiving unit is configured to receive an advertisement packet from the first device, wherein the advertisement packet comprises the first bandwidth; and
the processing unit is configured to set, based on the first bandwidth, a bandwidth for transmitting the service flow.

42. The second device according to claim 41, wherein the sending unit is further configured to send, to the first device, a service level parameter of the service flow and a reliability probability of meeting the service level parameter, wherein the service level parameter and the reliability probability are used for determining the first bandwidth by the first device.

43. The second device according to claim 41 or 42, wherein each of the one or more pieces of traffic sampling information comprises a total length of a packet that is of the service flow and that is obtained within a specified period.

44. The second device according to any one of claims 41 to 43, wherein the sending unit is specifically configured to send, to the first device, a first delay threshold for transmitting the service flow by a single device on the path for transmitting the service flow and a first reliability probability of meeting a delay of transmitting the service flow met by the single device is less than or equal to the first threshold, wherein the first delay threshold is a maximum delay for transmitting the service flow by the single device; and/or
send, to the first device, a first buffer threshold of a single device on the path for transmitting the service flow and/or a second reliability probability that a buffer of the single device is greater than or equal to the first buffer threshold, wherein the first buffer threshold is a minimum value of the buffer of the single device.

45. The second device according to any one of claims 41 to 43, wherein the sending unit is specifically configured to send, to the first device, a second delay threshold for end-to-end transmission of the service flow and a third reliability probability that a delay of end-to-end transmission of the service flow is less than or equal to the second delay threshold.

46. The second device according to any one of claims 41 to 45, wherein the processing unit is specifically configured to set a value of a committed information rate CIR of a port for transmitting the service flow to a value of the first bandwidth, and send the service flow based on the CIR.

47. The second device according to any one of claims 41 to 45, wherein the processing unit is specifically configured to set, based on a port bandwidth for transmitting the service flow and the first bandwidth, a scheduling weight value for transmitting the service flow, and send the service flow based on the scheduling weight value.

48. A system for determining a bandwidth for service flow transmission, wherein the system comprises a first device and a second device, wherein

the first device is configured to: obtain a first traffic sampling set of a service flow, a service level parameter corresponding to the service flow, and a reliability probability of meeting the service level parameter; determine, based on the first traffic sampling set, the service level parameter of the service flow, and the reliability probability, a first bandwidth for transmitting the service flow; and send the first bandwidth to the second device, wherein the first traffic sampling set comprises one or more pieces of traffic sampling information; and
the second device is configured to: send the first traffic sampling set to the first device, receive the first bandwidth, and set, based on the first bandwidth, a bandwidth for transmitting the service flow.

49. A computer-readable storage medium, comprising instructions, a program, or code, wherein when the instructions, the program, or the code is executed on a computer, the computer is enabled to perform the method according to any one of claims 1 to 27.

Network 100

Control device 101

Network device 102

Network device 103

Network device 104

Transmitting device 105

Receiving device 106

FIG. 1

FIG. 2

Step 301: A first device obtains a first traffic sampling set of a service flow

Step 302: The first device obtains a service level parameter corresponding to the service flow and a reliability probability of meeting the service level parameter for transmitting the service flow

Step 303: The first device determines, based on the first traffic sampling set, the service level parameter, and the reliability probability, a first bandwidth for transmitting the service flow

FIG. 3

FIG. 5

2. Service level parameter and corresponding reliability probability

Control device

1. Transmission path information

4. Determine a bandwidth

5. Configure a device bandwidth

Threshold

3. Traffic sampling set

First service flow

Second service flow

Third service flow

Scheduler

EP 4 149 155 A1

FIG. 6

FIG. 7

| NumSeamlessTrees |
|---|
| MaxLatency |
| Latency_ConfidenceLevel |

FIG. 8

First device 900

901

Obtaining unit ←→ Processing unit

902

FIG. 9

Second device 1000

1003

Processing unit

1001

Sending unit

1002

Receiving unit

FIG. 10

First device 1100

Processor 1101

Bus 1103

Interface
1102

FIG. 11

Second device 1200

Processor 1201

Bus 1203

Interface
1202

FIG. 12

First device
1301

Second device
1302

FIG. 13

## INTERNATIONAL SEARCH REPORT

| | International application No. |
|---|---|
| | **PCT/CN2021/094056** |

**A. CLASSIFICATION OF SUBJECT MATTER**

H04W 28/02(2009.01)i

According to International Patent Classification (IPC) or to both national classification and IPC

**B. FIELDS SEARCHED**

Minimum documentation searched (classification system followed by classification symbols)

H04W;H04L

Documentation searched other than minimum documentation to the extent that such documents are included in the fields searched

Electronic data base consulted during the international search (name of data base and, where practicable, search terms used)

CNPAT, CNKI, WPI, EPODOC, 3GPP, IEEE: 带宽, 采样, 业务流, 服务, 业务, 等级, 延时, 时延, 缓存, 级别, 可靠性, 概率, 可能, 违反, 违背, 超过, 预测, 估计, BW, BWP, bandwidth, service, stream, probability, service level agreement, delay, violation, buffer, overflow, estimate, predict+, SLA

**C. DOCUMENTS CONSIDERED TO BE RELEVANT**

| Category* | Citation of document, with indication, where appropriate, of the relevant passages | Relevant to claim No. |
|---|---|---|
| A | CN 102264109 A (CHINA MOBILE GROUP GUANGDONG COMPANY LIMITED) 30 November 2011 (2011-11-30) <br> description paragraphs 0027-0100 | 1-49 |
| A | CN 101141407 A (HANGZHOU H3C TECHNOLOGIES CO., LTD.) 12 March 2008 (2008-03-12) <br> entire document | 1-49 |
| A | US 2019102717 A1 (AT & T INTELLECTUAL PROPERTY I, L.P.) 04 April 2019 (2019-04-04) <br> entire document | 1-49 |
| A | US 2015195149 A1 (CISCO TECHNOLOGY, INC.) 09 July 2015 (2015-07-09) <br> entire document | 1-49 |
| A | XU, Xing et al. "A Novel Dynamic Bandwidth Allocation Algorithm for NG-PON based on QoS and SLA" <br> *2018 IEEE, 2018 Asia Communications and Photonics Conference (ACP)*, <br> 31 December 2018 (2018-12-31), <br> entire document | 1-49 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 August 2021** | **16 August 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/094056** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2018167318 A1 (THE PROVOST, FELLOWS, SCHOLARS AND OTHER MEMBERS OF BOARD OF TRINITY COLLEGE DUBLIN) 20 September 2018 (2018-09-20)<br>entire document | 1-49 |

Form PCT/ISA/210 (second sheet) (January 2015)

## INTERNATIONAL SEARCH REPORT
### Information on patent family members

International application No.

**PCT/CN2021/094056**

| Patent document cited in search report | | | Publication date (day/month/year) | Patent family member(s) | | | Publication date (day/month/year) |
|---|---|---|---|---|---|---|---|
| CN | 102264109 | A | 30 November 2011 | None | | | |
| CN | 101141407 | A | 12 March 2008 | None | | | |
| US | 2019102717 | A1 | 04 April 2019 | None | | | |
| US | 2015195149 | A1 | 09 July 2015 | WO | 2015103523 | A1 | 09 July 2015 |
| | | | | EP | 3092743 | A1 | 16 November 2016 |
| WO | 2018167318 | A1 | 20 September 2018 | GB | 201704185 | D0 | 03 May 2017 |
| | | | | EP | 3596936 | A1 | 22 January 2020 |
| | | | | JP | 2020510357 | A | 02 April 2020 |

Form PCT/ISA/210 (patent family annex) (January 2015)

**EP 4 149 155 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010449643X

- CN 202010890854